# EUROPEAN PATENT SPECIFICATION

(11) **EP 1 573 500 B1**
(45) Date of publication and mention of the grant of the patent: **30.01.2008**
(21) Application number: 03789612.3
(22) Date of filing: 18.12.2003
(51) Int. Cl.: G06F 3/033

(54) **Projection apparatus and image acquisition method**
Projektionsanordnung und Bildaufnahmeverfahren
Appareil de projection et procédé d'acquisition d'image

(30) Priority: 18.12.2002 JP 2002366005
(43) Date of publication of application: 14.09.2005
(73) Proprietor: CASIO COMPUTER CO., LTD., Shibuya-ku, Tokyo 151-8543 (JP)
(72) Inventor: MORICHIKA, Kazumasa, Ome-shi, Tokyo 198-0052 (JP)
(74) Representative: Grünecker, August
(86) International application number: PCT/JP2003/016271
(87) International publication number: WO 2004/055662

(56) References cited:
- WO-A-01/52230
- WO-A-02/065388
- US-A- 5 528 263
- US-B1- 6 388 654

## Description

The present invention relates to a projection apparatus and an image acquisition method which project a document image onto a screen.

In conventional presentation on projects, commodity ,a document stored as data in a personal computer (PC) or a document comprised of texts and diagrams is projected, magnified, onto a screen by a projector. A typical projector has a structure which uses an image converting element such as a liquid crystal or a micro-mirror array, and converts image information of a document output as video signals from a PC to projection light.

In presentation, persons who participate in the presentation often directly write comments, underlines on a projected document (on the screen). Therefore, it is often the case where a white board is used as a projection screen. In case where a presenter such as a document creator wants to use comments written by a participant, e.g., in case where the presenter wants to correct the contents of the document referring to the comments or add the comments to the document, a so-called electronic board is used as a screen and comments handwritten on the electronic board are saved by a hard copy (print) or the image of a white board is picked up by a digital camera prepared separately to be saved as image data. For example, Japanese Patent Laid-Open No. 2001-169211 describes a projector equipped with a camera, though the usage is totally different.

In case of using handwritten information on a screen which is saved as mentioned above, however, when a document to be used in presentation contains a large number of sheets (pages), it is difficult to determine the correlation between the number of pieces of saved handwritten information and the number of pages of the document after presentation. In case where the number of pieces of saved handwritten information does not match with the number of pages of the document (normally, the number of pieces of saved handwritten information is often smaller than the number of pages of the document), particularly, it is difficult to determine the correlation between the saved handwritten information and the pages of the document.

US Patent 6,388,654 relates to a remote conferencing application by means of which visual information can be distributed to and modified by a plurality of remote sites. Each site may be equipped by a computer controlled projector for projecting images to a white board and a digital camera for detecting the projected image together with any markings made to the white board. A computer is analyzing the detected images to extract these markings. Information on these markings is distributed to the remote sites where this information is added to the projected background images so as to produce a similar image on the respective white board. In particular, this reference describes storing the background image together with the marking information to a suitable recording medium upon request by a user. However, this application is neither able to identify a page or a document from which the background image was derived, nor to paste the marking information into the identified document.

The present invention has been made to overcome the conventional problem and aims at providing a projection apparatus and an image acquisition method which can use handwritten information on a screen.

This is achieved by the features of the independent claims. Preferred embodiments are the subject matter of dependent claims.

The word "embodiment" all over the description is to be understood as "example".

### Brief Description of Drawings

These objects and other objects and advantages of the present invention will become more apparent upon reading of the following detailed description and the accompanying drawings in which:
Fig. 1 is a structural diagram of a projection system illustrating first and fourth to sixth embodiments of the present invention;
Fig. 2 is a block diagram showing the schematic structures of a projector and personal computer common to the first, fourth and fifth embodiments;
Fig. 3 is a flowchart illustrating the operation of the projector according to the first embodiment;
Fig. 4A is an explanatory diagram showing one example of a document image to be stored in the first embodiment;
Fig. 4B is an explanatory diagram showing one example of a handwritten information image to be stored in the first embodiment;
Fig. 5 is a structural diagram of a projection system common to second, third and eighth embodiments of the invention;
Fig. 6 is a block diagram showing the schematic structures of a projector and personal computer in the projection system;
Fig. 7 is a flowchart illustrating the operation of the projector according to the second, third and eighth embodiments;
Fig. 8 is an explanatory diagram showing a text recognized area in a document image according to the second, third and eighth embodiments;
Fig. 9 is a flowchart illustrating the procedures of an image pasting routine done by the personal computer according to the second, third and eighth embodiments;
Fig. 10 is a flowchart illustrating the operation of the projector according to the third embodiment of the invention;
Fig. 11 is an explanatory diagram showing a text recognized area in a document image according to the third embodiment;
Fig. 12 is a flowchart illustrating the procedures of an image pasting routine done by the personal computer according to the third embodiment;
Fig. 13 is a flowchart illustrating the procedures of an image pasting routine done by the personal computer according to the fourth embodiment;
Fig. 14 is a flowchart illustrating the operations of the projector and personal computer during projection of a document according to the fifth embodiment;
Fig. 15 is an explanatory diagram showing one example of a projected image according to the fifth embodiment;
Fig. 16 is a flowchart illustrating the procedures of an image pasting routine done by the personal computer according to the fifth embodiment;
Fig. 17 is a block diagram showing the schematic structures of the projector and personal computer according to the sixth embodiment;
Fig. 18 is a flowchart illustrating the operations of the projector and personal computer during projection of a document according to the sixth embodiment;
Fig. 19 is an explanatory diagram showing display history information which is created by the personal computer according to the sixth embodiment;
Fig. 20 is a flowchart illustrating the procedures of an image pasting routine done by the personal computer according to the sixth embodiment;
Fig. 21 is a structural diagram of a projection system illustrating a seventh embodiment of the present invention;

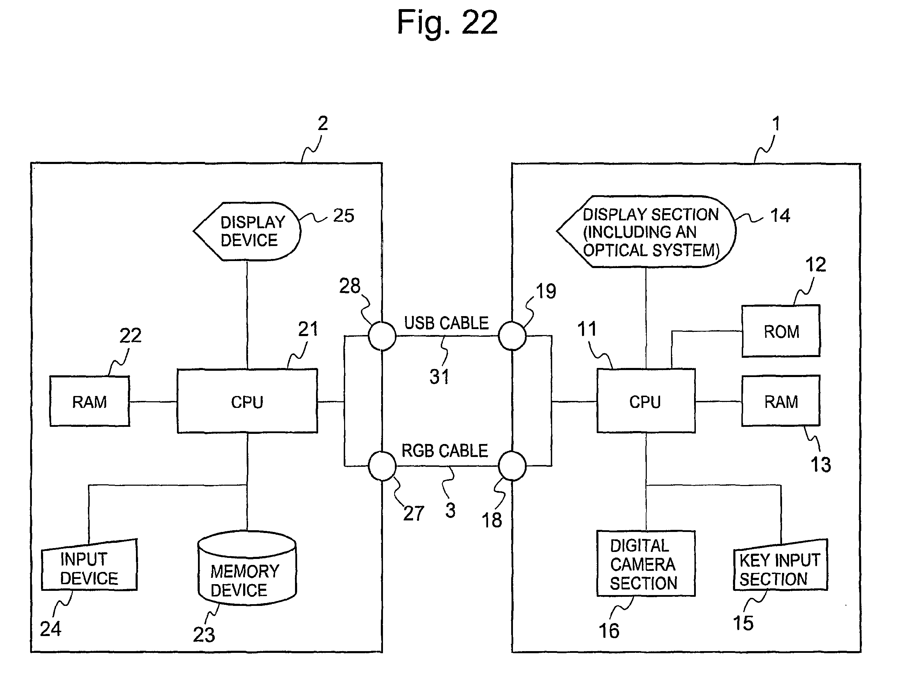

Fig. 22 is a block diagram showing the schematic structures of a projector and personal computer which constitute the projection system;
Fig. 23 is a flowchart illustrating the operations of the projector and personal computer during projection of a document according to the seventh embodiment;
Fig. 24 is an explanatory diagram showing image management data which is created by the personal computer according to the seventh embodiment;
Fig. 25 is a flowchart illustrating the procedures of an image pasting routine done by the personal computer according to the seventh embodiment;

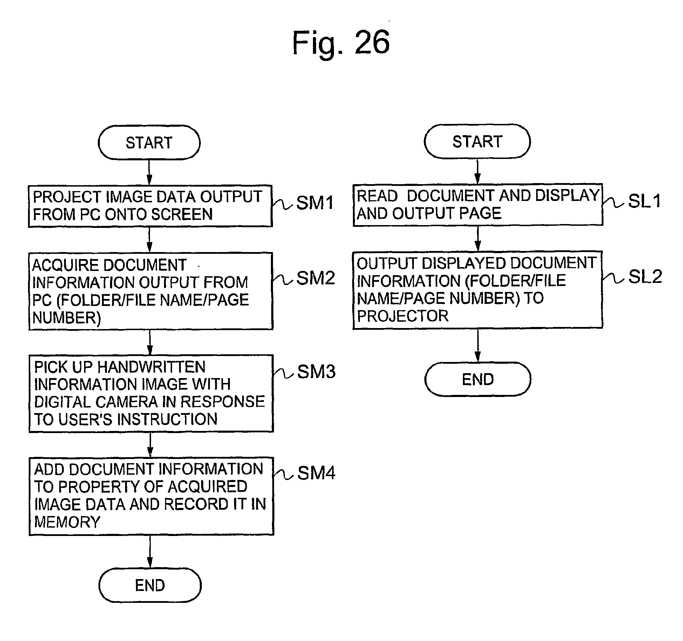

Fig. 26 is a flowchart illustrating the operations of the projector and personal computer during projection of a document according to the eighth embodiment of the invention;
Fig. 27 is an explanatory diagram showing the contents of appended data of an image file which is recorded by the projector according to the eighth embodiment; and
Fig. 28 is an explanatory diagram showing display history information which is created by the personal computer according to the eighth embodiment.

### Best Mode for Carrying Out the Invention

One preferred embodiment of the present invention is described below with reference to the accompanying drawings.

### (First Embodiment)

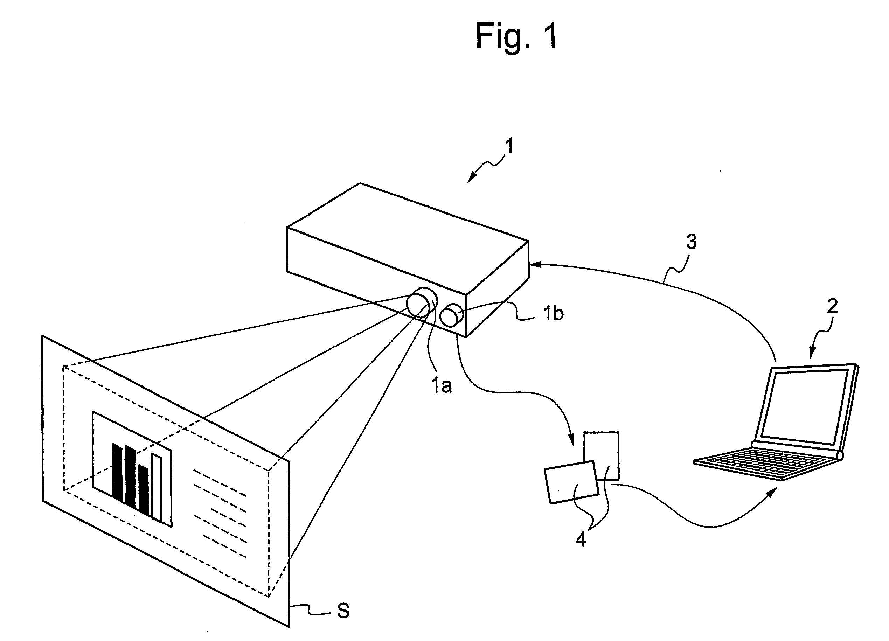

Fig. 1 is a structural diagram of a projection system according to the first embodiment. This projection system projects the display image of a document comprised of texts and diagrams onto a screen S, such as a white board, acquires texts written on the screen S by image pickup and saves the handwritten texts and the display image as one set. The projection system comprises a projector 1 and a personal computer (PC) 2. The projector 1 and the PC 2 are connected together by an RGB cable 3. The projector 1 is used to project a document in presentation and incorporates a digital camera for picking up the image of the screen S, such as a white board. A projection section 1a and a image pickup section 1b are provided side by side on the front side of the main body of the projector 1. The projection section la comprises an optical system, such as a projection lens, which projects a display image. The image pickup section 1b comprises an optical system, such as an image pickup lens, which picks up an image. Further, the projector 1 has a slot (not shown) where a memory card 4 is to be loaded and data is given to the PC 2 via the memory card 4.

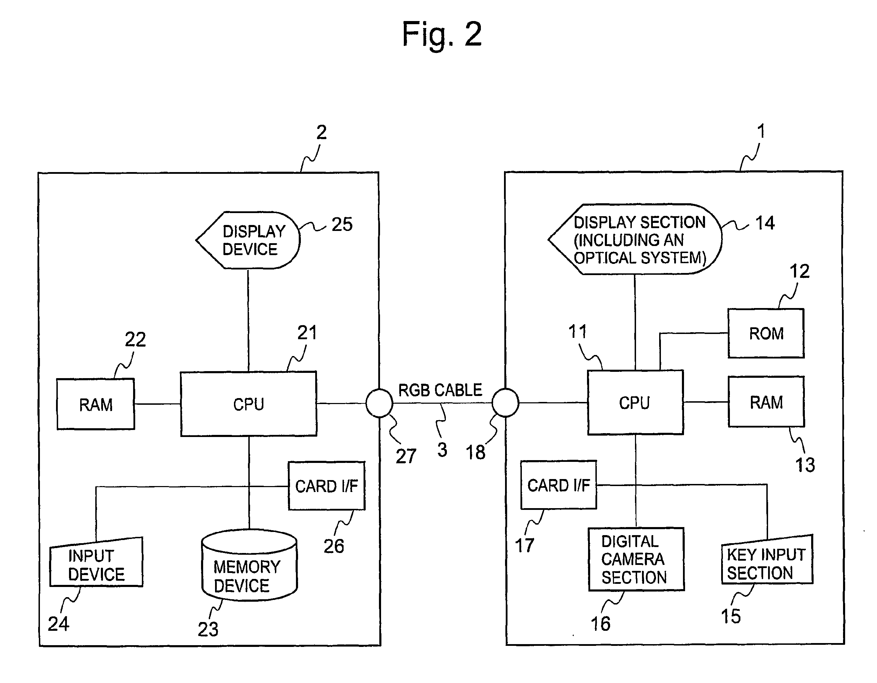

Fig. 2 is a block diagram showing the schematic structures of the projector 1 and the PC 2. The projector 1 mainly comprises a CPU (Central Processing Unit) 11, a ROM (Read Only Memory) 12, a RAM (Random Access Memory) 13, a display section 14, a key input section 15, a digital camera section 16 and a card interface circuit 17. The projector 1 also has an input terminal 18 for RGB signals to which the RGB cable 3 is connected.

The card interface circuit 17 serves to carry out data input/output with respect to the memory card 4. The memory card 4 stores images picked up by the digital camera section 16.

The display section 14 projects a document image of a document (comprised of texts and diagrams) output from the PC 2 onto the screen S and includes a light source, an image converting element, a drive circuit and an optical system.

The light source, like a krypton lamp, emits light. The image converting element converts light from the light source to projection light and comprised of a liquid crystal or micro-mirror array.

The drive circuit drives the image converting element in accordance with RGB signals input from the input terminal 18.

The optical system comprises the projection lens in the projection section 1a.

The key input section 15 is prepared for a user to operate the projector 1 and has a plurality of operation buttons, such as an operation button for an image pickup operation.

The digital camera section 16 picks up the image of the screen S as a subject as a predetermined operation button constituting the key input section 15 is depressed. The digital camera section 16 has an optical system, an image pickup element and an image data processing circuit (none shown). The optical system comprises the image pickup lens in the image pickup section 1b. The image pickup element photoelectrically converts an optical image formed by the optical system into an image signal and comprises a CMOS sensor, CCD or the like. The image data processing circuit compresses a picked-up image, output from the image pickup element and converted to a digital signal. The digital camera section 16 finally records generated imaged data as an image file of the JPEG format in the memory card 4 via the card interface circuit 17.

A program is stored in the ROM 12. The CPU 11 controls the aforementioned individual sections using the RAM 13 as a work memory in accordance with the program stored in the ROM 12. Specifically, the CPU 11 acquires a picked-up image including a document and recorded information recorded on the screen S by causing the display section 14 to project a document image onto the screen S and causing the digital camera section 16 to pick up the image of the screen S. The CPU 11 acquires a picked-up image containing only the recorded information by causing the display section 14 to stop projecting a document image onto the screen S and causing the digital camera section 16 to pick up the image of the screen S. The CPU 11 stores the two acquired images as data in the memory card 4 in association with each other.

The input terminal 18 is provided in an unillustrated input image processing circuit connected to the CPU 11.

The PC 2 supplies the projector 1 with data of a document to be projected onto the screen S and comprises a RAM 22, a memory device 23, an input device 24, a display device 25 and a card interface circuit 26.

The PC 2 has an output terminal 27 for RGB signals to which the RGB cable 3 is connected. The output terminal 27 is provided in an unillustrated image signal processing circuit connected to the CPU 11.

The memory device 23 comprises a hard disk with a relatively large memory capacity and stores a predetermined presentation program for creating and editing a document for presentation. The presentation program includes a plurality of commands selectable by a user, such as a command to instruct the execution of a process of pasting an image of a handwritten text to the display image of the document. The memory device 23 stores data of a document comprised of texts and diagrams to be projected onto the screen S as a document file.

The CPU 21 controls the individual sections using the RAM 13 as a work memory in accordance with the program stored in the memory device 23.

The input device 24 has a plurality of keys provided on its main body and a mouse connected to the main body.

The card interface circuit 26 comprises an LCD, a drive circuit for the LCD and so forth. The card interface circuit 26 serves to carry out data input/output with respect to the memory card 4.

The operations of the projector 1 and PC 2 are described below.

As a user designates a document to be projected onto the screen S by operating the input device 24 of the PC 2, the PC 2 responsively acquires its document data from the memory device 23. The PC 2 outputs the acquired document data as RGB signals to the projector 1 via the RGB cable 3.

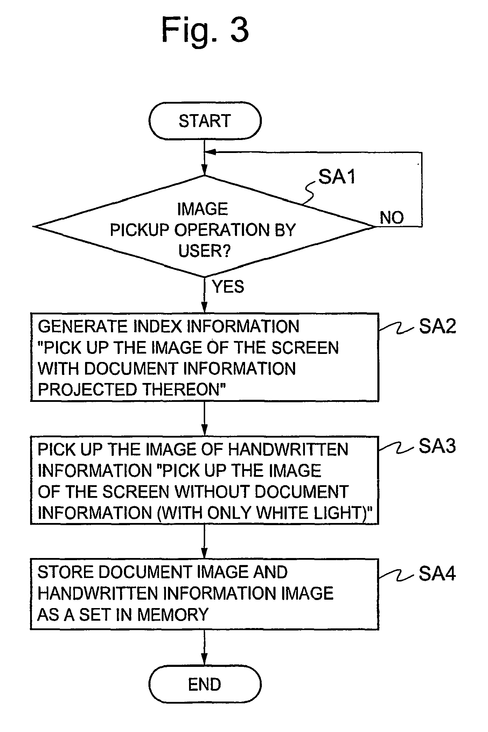

The projector 1 projects the document, output as RGB signals from the PC 2, onto the screen S. During projection of a display image displayed on the screen S, the projector 1 records handwritten information according to a flowchart illustrated in Fig. 3. It is premised in the following description that handwritten information, such as comments and underlines, is directly written on the screen S by a participant in the presentation.

The projector 1 (CPU 11) determines whether or not an image pickup operation has been done (step SA1).

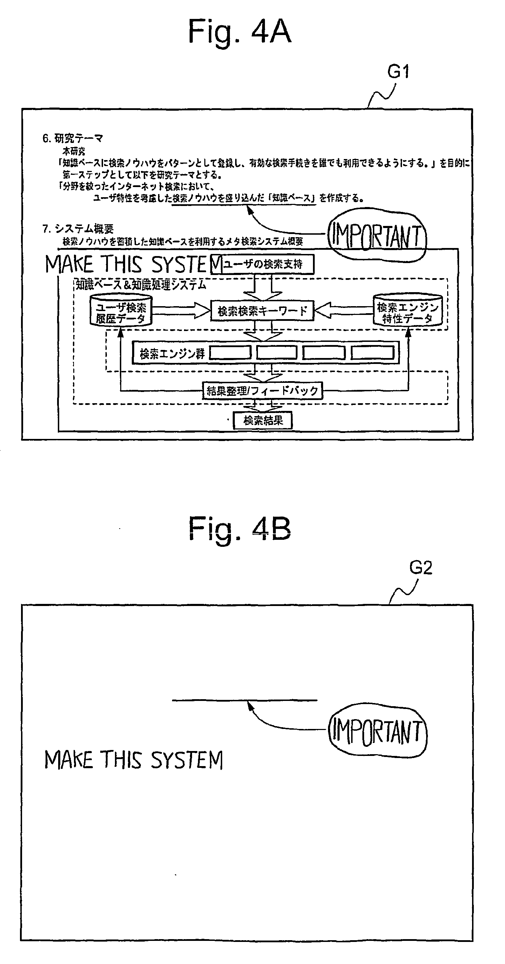

When the user depresses an operation button for image pickup on the key input section 15, the projector 1 determines that an image pickup operation has been performed (YES in step SA1). When such a decision is made, the projector 1 controls the digital camera section 16 to pick up the then image of the screen S or the image of the screen S in a document-projected state where a display image based on document information. The projector 1 temporarily stores data of the picked-up image, e.g., a picked-up image as shown in Fig. 4A (hereinafter called "document image") G1 in the RAM 13 as index information (step SA2).

Next, the projector 1 stops projecting the document being projected, irradiates only white light onto the screen S to set a non-projection state of the display image and picks up the image of the screen S. Accordingly, the projector 1 acquires a picked-up image of handwritten texts as shown in, for example, Fig. 4B (hereinafter called "handwritten information image") G2 (step SA3). Then, the projector 1 records the document image G1 and the handwritten information image G2 as a set in the memory card 4 loaded into the main body (step SA4). The projector 1 records both images G1 and G2 to which file names different only in the end (for example, "AAAA-1.jpg" and "AAAA-2.jpg") are affixed. Apparently, this process is to record both images G1 and G2 in association with each other so as to make it possible to identify that the images G1 and G2 were recorded in the same image pickup operation. This completes a single handwritten information recording process. During projection of a document, the projector 1 repeats the above-described process every time the user performs the image pickup operation.

According to the embodiment, a document image G1 and handwritten information image G2 are recorded in the memory card 4 in association with each other. Therefore, a user or the creator of the document can use the handwritten information by loading the memory card 4 into the PC 2 after the end of presentation or the like and displaying the handwritten information image G2 stored in the memory card 4. What is more, the user can easily know which projection of which document the handwritten information was written.

Although the image of the screen S is picked up continuously in accordance with a predetermined image pickup operation by a user to acquire a document image G1 and a handwritten information image G2 consecutively in the embodiment, the following way may be taken.

The projector 1 may acquire a document image G1 after acquiring a handwritten information image G2. Further, the timing for acquiring both images G1 and G2 may be the time at which a document to be projected is changed, not the time at which an image pickup operation is performed. For example, the projector 1 may be provided with a detection section which detects switching of a document based on a change in the contents of RGB signals sent from the PC 2. Even when the detection section detects switching of the document, the projector 1 keeps projecting a display image before document switching and picks up the image of the screen S after which it picks up the image of the screen S in a non-projection state. That is, the projector 1 may be constructed in such a way as to acquire and record a document image G1 and handwritten information image G2 for every document. In case where there is no handwritten information, however, the projector 1 acquires and records only a document image G1.

The projector 1 may also be constructed in such a way as to acquire a document image G1 at the timing when handwritten information is not written on the screen S, such as immediately after a document to be projected is switched or immediately after a page of the document is changed.

For example, immediately after a page of the document is changed, the projector 1 picks up the image of the screen S in a state where handwritten information is not written to thereby acquire a document image G1 and pre-stores the acquired document image G1 in the RAM 13 . The projector 1 acquires only a handwritten information image G2 when a user performs an image pickup operation.

In the embodiment, the projector 1 records the acquired document image G1 and handwritten information image G2 in the memory card 4. In case where the projector 1 has such a structure as to be able to output data to the PC 2, the projector 1 may output data (image files) of the document image G1 and handwritten information image G2 one after another to the PC 2 which in turn may store the data of the document image G1 and handwritten information image G2 as one set in the memory device 23 . In this case, the PC 2 can store the original data of the stored document image G1 and the data of the handwritten information image G2 output from the projector 1 in the memory device 23 in association with each other.

The foregoing description of the embodiment has discussed an example in which the projector 1 projects the display image of a document onto the screen S based on RGB signals output from the PC 2. However, the projector 1 can read out original data (document file) recorded in a predetermined format from the memory card 4 and project the display image of the document onto the screen S.

### (Second Embodiment)

The second embodiment of the invention is described next.

An image pickup apparatus according to the second embodiment of the invention is designed in such a way as to acquire a page number of a document through character recognition and records the acquired page number, taken as index information indicating the correlation between the page of the document and a handwritten information image, and a handwritten information image as a set.

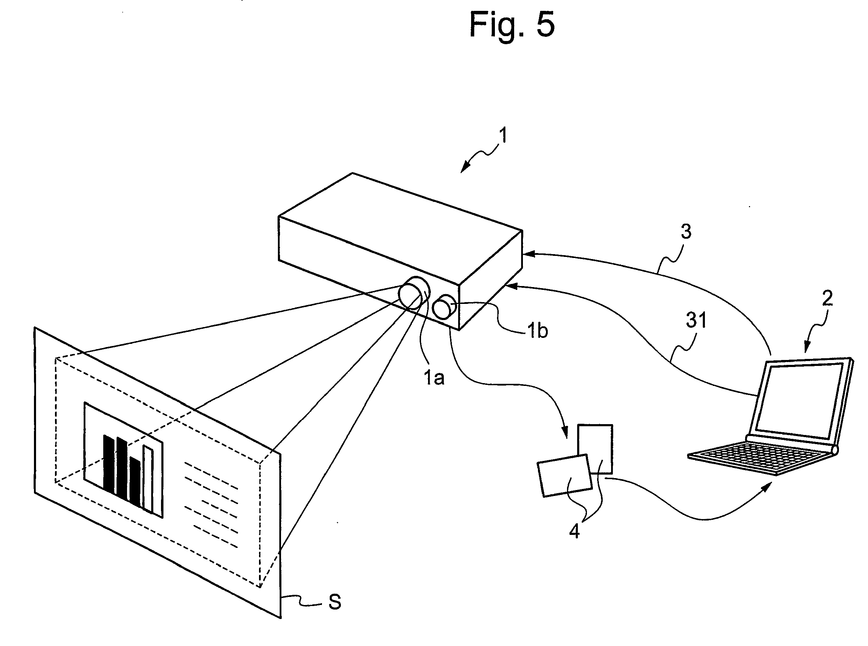

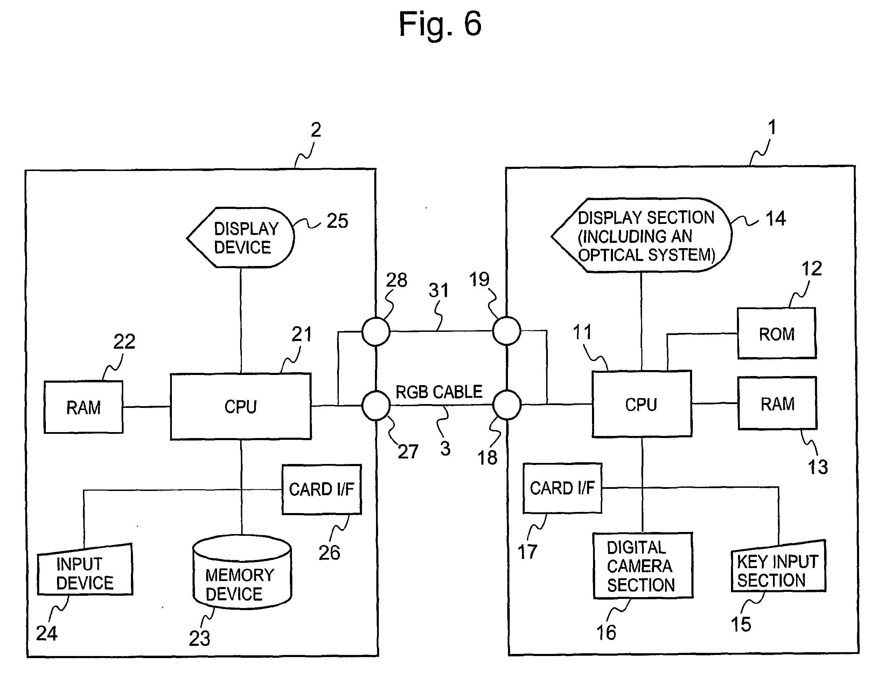

Fig. 5 is a structural diagram of a projection system according to the second embodiment. The projection system, like that of the first embodiment, comprises the projector 1 and the PC 2. Fig. 6 is a block diagram showing the schematic structures of the projector 1 and the PC 2 in this embodiment. The projector 1 and PC 2 in the embodiment respectively have USB terminals 19 and 28 and are connected together by a USB cable 31. The USB terminals 19 and 28 are actually provided in an USB interface circuit (not shown) connected to CPUs 11 and 21. Accordingly, the PC 2 can send data to the projector 1.

Like or same reference symbols are given to those components which are the same as the corresponding components of the first embodiment and their redundant descriptions are omitted.

The operations of the projector 1 and PC 2 in the embodiment are described below. First, the operation of the projector 1 is discussed.

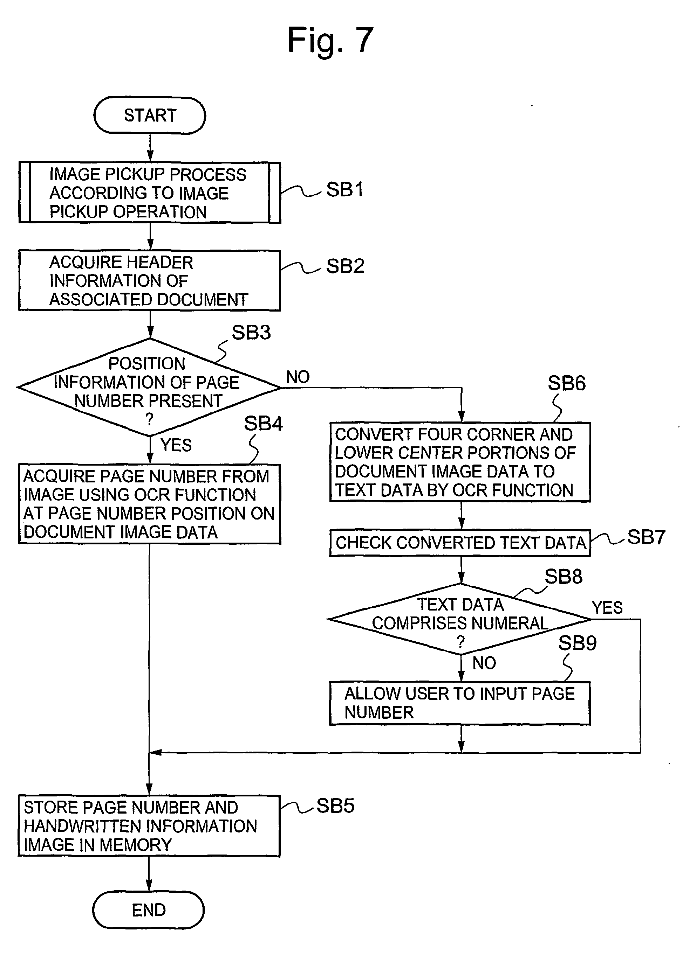

Based on a flowchart shown in Fig. 7, the projector 1 executes a process of recording handwritten information during projection of a document output from the PC 2 as RGB signals. It is premised here that handwritten information, such as comments and underlines, is directly written on the screen S by a participant in the presentation.

The projector 1 acquires the document image G₁ and handwritten information image G2 as shown in Figs. 4A and 4B by performing an image pickup process according to an image pickup operation performed by a user (step SB1). This process is the same as the process in steps SA1 to SA3 in the first embodiment illustrated in Fig. 3.

Next, the projector 1 acquires header information of the document which is projected (step SB2).

The projector 1 determines whether or not the header information has information indicating a print position as position information of a page number (step SB3).

When it is determined that the header information has position information of a page number (YES in step SB3), the projector 1 acquires the page number from image data of the document image G1 by performing OCR (Optical Character Recognition) on the position of the page number (area corresponding to the position indicated by the position information) on the document image G1 (step SB4). Thereafter, the projector 1 records the acquired page number, taken as index information, and the handwritten information image G2 as a set in the memory card 4 loaded into the main body (step SB5).

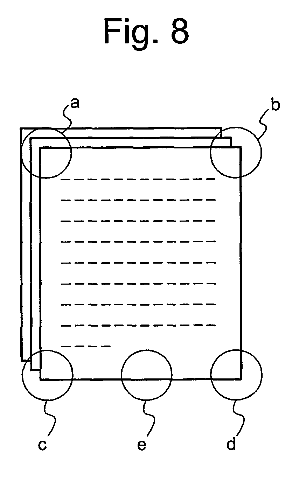

When it is determined that the header information acquired from the PC 2 does not have position information of a page number (NO in step SB3), on the other hand, the projector 1 performs OCR on four corners and the bottom center portion a to e of the document image G1 as shown in Fig. 8, i.e., recognition areas which are likely portions where a page number is printed (displayed), and converts the images of the individual recognition areas (a to e) to text data (step SB6). The projector 1 checks the converted text data (step SB7).

Then, the projector 1 determines whether or not the text data comprises a numeral (step SB8).

When it is determined that there is a numeral (YES in step SB8), the projector 1 records the numeral, taken as a page number, and a handwritten information image G2 as a set in the memory card 4 (step SB5).

When it is determined that no numeral is present in any of the areas (NO in step SB8), the projector 1 causes the user to input the page number through prompting (step SB9). When the page number is input, the projector 1 records the input page number and the handwritten information image G2 as a set into the memory card 4 (step SB5). This completes a single handwritten information recording process. During projection of a document, the projector 1 repeats the above-described process every time the user performs the image pickup operation.

It is to be noted that the process in the step SB5 is to record the acquired page number and handwritten information image G2 in association with each other so as to make it possible to identify that the page number and handwritten information image G2 were recorded in the same image pickup operation. This process is to give the same file names different only in an identifier portion indicating a data type, such as "AAAA.jpg" and "AAAA.txt", to the page number and handwritten information image G2 or record both data in the memory card 4 in the determined order, for example, with consecutive recording addresses given.

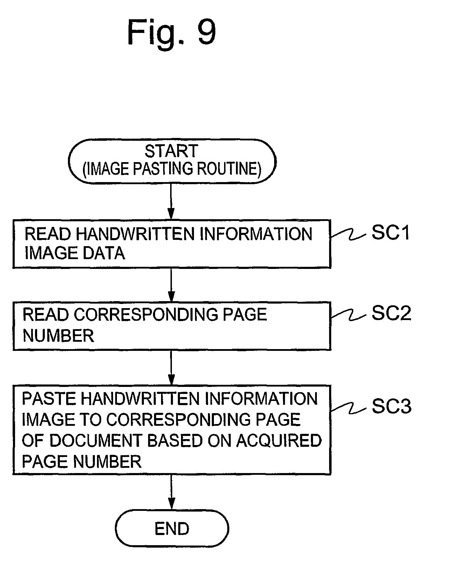

When the memory card 4 where a set of an associated handwritten information image G2 and page number or plural sets of associated handwritten information images G2 and page numbers are recorded is loaded and then a command to execute an image pasting routine is selected, the PC 2 executes the image pasting routine according to a flowchart illustrated in Fig. 9. It is premised here that a document to be processed is designed beforehand by a user.

The PC 2 first reads the handwritten information image G2 from the memory card 4 (step SC1). Further, the PC 2 reads a page number corresponding to the handwritten information image G2 (step SC2). Next, based on the read page number, the PC 2 acquires the handwritten information image G2 stored in the memory device 23 and pastes this handwritten information image G2 to a corresponding page of the document designated beforehand (step SC3). Then, the PC 2 repeats the above-described sequence of processes in order by the number of handwritten information images G2 recorded in the memory card 4.

According to the embodiment, as apparent from the above, the page number of a document is acquired through character recognition and the acquired page number as index information is stored as a set with a handwritten information image. Therefore, the user can automatically paste saved handwritten information to a corresponding page and use it without a need to check himself or herself to which page of the document the handwritten information saved at the time of projecting the document corresponds.

In the embodiment, the order of acquiring a document image G1 and a handwritten information image G2 and the timing of acquiring the document image G1 can be changed as needed as per the first embodiment.

In the embodiment, the projector 1 acquires the header information of a projected document from the PC 2. But, the system may take such a structure as not to acquire the header information of a document from the PC 2. That is, the projector 1 and the PC 2 need not be connected together by the USB cable 31 and the same hardware structure as that of the first embodiment may be employed. In this case, the processes in steps SB2 to SB4 in the routine shown in Fig. 7 may be omitted.

In case where the header information of a document is not acquired from the PC 2, the projector 1 may operate as follows. For example, the projector 1 records a set of an associated handwritten information image G2 and page number or plural sets of associated handwritten information images G2 and page numbers in the memory card 4 by the same procedures as done in the first embodiment. Then, the projector 1 first performs the process of step SB6 for a plurality of document images G1 at a time in response to the user's request. The projector 1 checks text data at the same position (area) in every document image G1 (step SB7). If the text data comprises a numeral (YES in step SB8), the projector 1 may use the numeral acquired from the same position of each document image G1 in step SB5 as a page number and may record each page number and a corresponding handwritten information image G2 as a set in the memory card 4. In this case, the page number corresponding to the handwritten information image G2 can be acquired more accurately.

In the embodiment, the projector 1 records the acquired document image G1 and page number in the memory card 4. However, the system structure may be modified in such a way that the projector 1 outputs document images G1 and page numbers to the PC 2 via the USB cable 31 one after another and stores them in the PC 2 (memory device 23). Further, the system structure may be modified in such a way that the projector 1 outputs the document image G1 and handwritten information image G2, acquired in step SB1, directly to the PC 2 and the PC 2 performs a process concerning acquisition of a page number, which is done by the projector 1 in the second embodiment, before the above-described image pasting routine.

The second embodiment, like the first embodiment, can be adapted to the projector which has functions of reading original data of a document recorded in the memory card 4 and projects the display image of the document onto the screen S based on the read data. In this case, the projector 1 may be allowed to perform the above-described image pasting routine by the PC 2 in accordance with a predetermined operation by a user or every time an image pickup operation is performed by the user.

### (Third Embodiment)

The third embodiment of the invention is described next. This embodiment is the projection system of the second embodiment as shown in Figs. 5 and 6 which is so modified as to record a page title present on each page of a document, in place of a page number, and a handwritten information image G2 as a set in the memory card 4.

It is assumed that a document stored as a document file in the memory device 23 has header information including position information indicating a print position of a page title present on each page as information on the document.

The operations of the projector 1 and PC 2 according to the invention in the embodiment are discussed below. To begin with, the operation of the projector 1 is discussed.

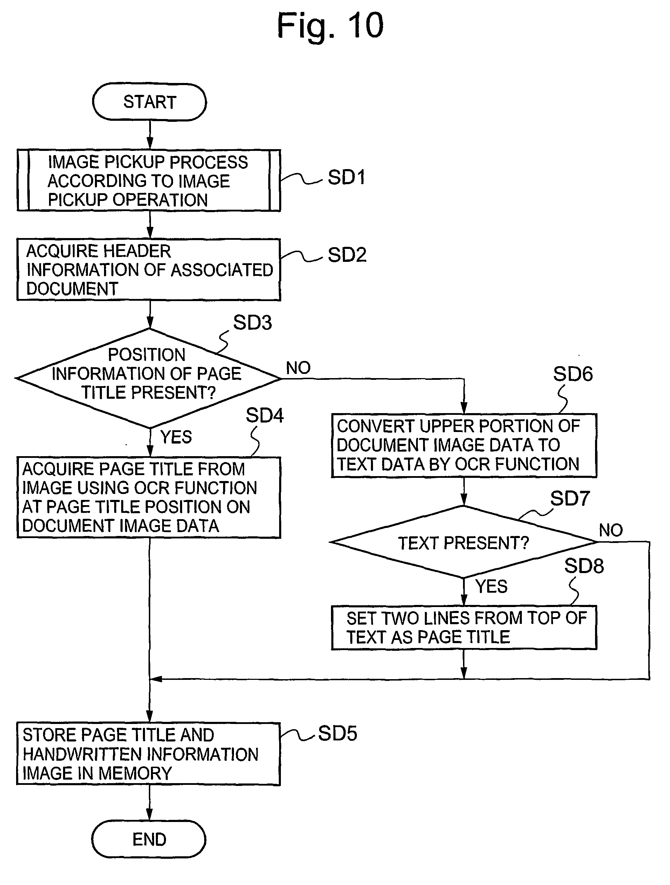

Based on a flowchart shown in Fig. 10, the projector 1 records handwritten information during projection of a document output from the PC 2 as RGB signals. It is premised here that handwritten information, such as comments and underlines, is directly written on the screen S by a participant in the presentation.

In this embodiment, like the first embodiment, the projector 1 acquires the document image G1 and handwritten information image G2 as shown in Figs. 4A and 4B by performing an image pickup process according to an image pickup operation performed by a user during image projection (step SD1). This process is the same as the process in steps SA1 to SA3 in the first embodiment illustrated in Fig. 3.

Next, the projector 1 acquires header information of the document which is projected (step SD2).

The projector 1 determines whether or not the acquired header information has position information of a page title (step SD3).

When it is determined that the header information has position information of a page title (YES in step SD3), the projector 1 performs OCR at the page title position (area) on the document image G1, indicated by the position information. Then, the projector 1 acquires a page title from image data of the document image G1 (step SD4).

Thereafter, the projector 1 records the acquired page title, taken as index information, and the handwritten information image G2 as a set in the memory card 4 loaded into the main body (step SD5).

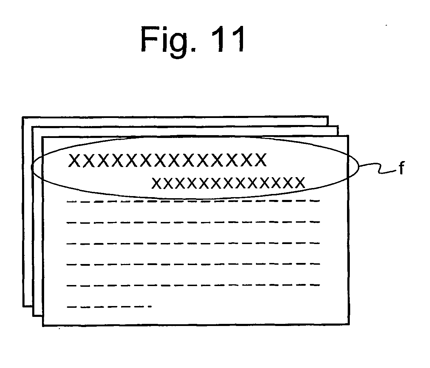

When it is determined that the header information acquired from the PC 2 does not have position information of a page title (NO in step SD3), on the other hand, the projector 1 performs OCR on an upper portion f of four of the document image G1 as shown in Fig. 11, i.e., a recognition area which is a likely portion where a page title is printed (displayed), and converts the image of that recognition area (f) to text data (step SD6).

Then, the projector 1 determines whether or not text data is present in the recognition area (step SD7).

When it is determined that there is text data in the recognition area (YES in step SD7), the projector 1 sets, for example, two lines from the top of the text as a page title (step SD8) and records the numeral, taken as a page number, and a handwritten information image G2 as a set in the memory card 4 (step SD5).

When it is determined that there is no text present (NO in step SD7), the projector 1 records only the handwritten information image G2 in the memory card 4 (step SD5).

It is to be noted that the process in the step SD5 is to record the acquired page title and handwritten information image G2 in association with each other so as to make it possible to identify that the page title and handwritten information image G2 were recorded in the same image pickup operation. The specific process contents are the same as those of the second embodiment.

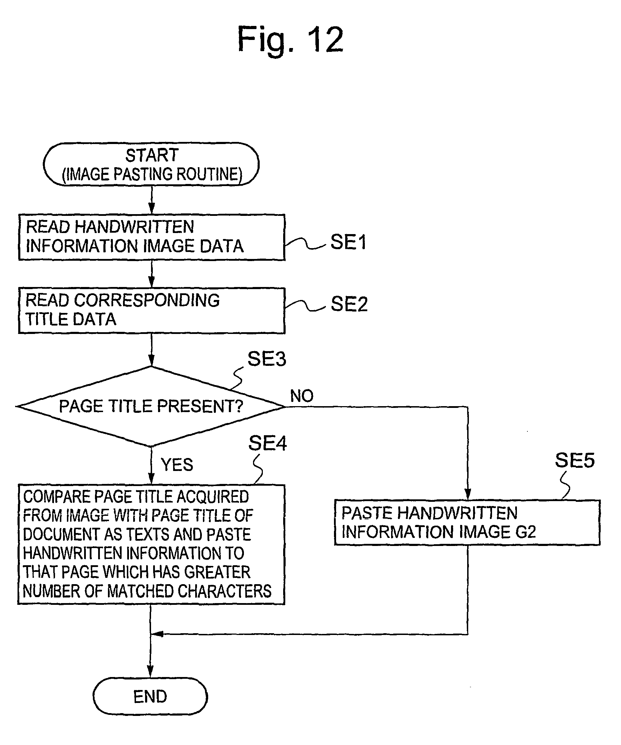

When the memory card 4 where a set of an associated handwritten information image G2 and page title or plural sets of associated handwritten information images G2 and page titles are recorded is loaded and then a command to execute an image pasting routine is selected, the PC 2 executes the image pasting routine according to a flowchart illustrated in Fig. 12. It is premised here that a document to be processed is designed beforehand by a user.

The PC 2 first reads the handwritten information image G2 from the memory card 4 (step SE1). Further, the PC 2 reads title data corresponding to the read handwritten information image G2 from the memory card 4 (step SE2).

The PC 2 determines whether or not the title data read from the memory card 4 has data of a page title (step SE3).

When it is determined that the title data read from the memory card 4 has data of a page title (YES in step SE3), the PC 2 acquires data of page title on all the pages of the document designated beforehand and stored in the memory device 23. The PC 2 compares the page title data acquired from the memory device 23 with the page title data read from the memory card 4 as text data. Then, the PC 2 pastes the handwritten information image G2 to that page which contains a greater number of characters which match (step SE4).

In case where it is determined that the title data read from the memory card 4 does not have page title data (NO in step SE3), the PC 2 causes the user to perform manual pasting, considering that there is no page title. That is, the PC 2 causes the user to designate a corresponding page by means of a display or the like (step SE5). Then, the PC 2 repeats the above-described sequence of processes in order by the number of handwritten information images G2 recorded in the memory card 4.

According to the embodiment, as apparent from the above, in case where there is page title data on each page of a document, the user can automatically paste saved handwritten information to a corresponding page and use it without a need to check himself or herself to which page of the document the handwritten information saved at the time of projecting the document corresponds.

In the embodiment, the order of acquiring a document image G1 and a handwritten information image G2 and the timing of acquiring the document image G1 can be changed as needed as per the first and second embodiments.

In case where the projector 1 cannot acquire page title data from the document image G1 in the above-described process (NO in step SD8), only the handwritten information image G2 is recorded in the memory card 4 in the subsequent step SD5 in the embodiment. In that case, however, the projector 1 may record the document image G1 in place of the page title which could not be acquired and the handwritten information image G2 as a set as per the first embodiment. In this case, the PC 2 displays the handwritten information image G2 at the time of pasting the handwritten information image G2 to the page designated by, for example, the user's manual work (step SE5). This can allow the user to recognize to which one of pages of the document which do not have page titles the handwritten information image G2 corresponds.

In the embodiment, as in the second embodiment, the system may take such a structure as not to acquire the header information of a document from the PC 2. In this case, the processes in steps SD2 to SD4 in the routine shown in Fig. 10 should be omitted. In case where the header information of a document is not acquired from the PC 2, for example, the projector 1 records a set of an associated handwritten information image G2 and page title or plural sets of associated handwritten information images G2 and page titles in the memory card 4 by the same procedures as done in the first embodiment. Thereafter, the projector 1 may perform the processes of steps SD6 to SD8 and SD5 at a time in order to meet the user's request.

In the embodiment, the projector 1 records the acquired document image G1 and page title in the memory card 4. However, the system structure may be modified in such a way that the projector 1 outputs document images G1 and page titles to the PC 2 via the USB cable 31 one after another and the PC 2 stores them in the memory device 23. Further, the system structure may be modified in such a way that the projector 1 outputs the document image G1 and handwritten information image G2, acquired in step SD1, directly to the PC 2 and the PC 2 performs a process concerning acquisition of a page title, which is done by the projector 1 in the second embodiment, before the above-described image pasting routine.

The projector 1 may have functions of reading original data of a document recorded in the memory card 4 and projects the display image of the document onto the screen S based on the read data, as per the first embodiment. In this case, the projector 1 may be allowed to perform the above-described image pasting routine by the PC 2 in accordance with a predetermined operation by a user or every time an image pickup operation is performed by the user.

### (Fourth Embodiment)

The fourth embodiment of the invention is described next. This embodiment is designed in such a way as to acquire a document by obtaining the correlation between patterns of both a document image G1 and the original document using the document image G1 stored in the memory card as index information.

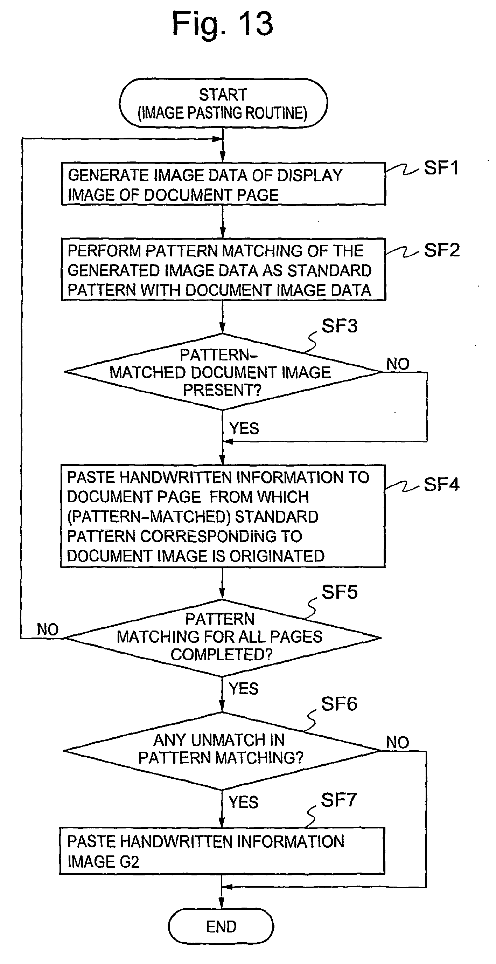

The projector 1 records a set of an associated document image G1 and handwritten information image G2 or plural sets of associated document images G1 and handwritten information images G2 in the memory card 4 by the procedures explained referring to Fig. 3. When a command to execute an image pasting routine is selected after the memory card 4 having both images G1 and G2 recorded there in is loaded, the PC 2 executes the image pasting routine according to a flowchart illustrated in Fig. 13. It is also premised here that a document to be processed is designed beforehand by a user.

Based on one page of data of a document stored in the memory device 23, the PC 2 generates image data of its display image (step SF1).

With the generated image data as a standard pattern (template), the PC 2 executes pattern matching on all the document images G1 stored in the memory card 4 (step SF2). For instance, the PC 2 executes pattern matching to check the correlation between two images on the image data level by moving the standard pattern while placing it over each document image G1.

The PC 2 determines whether or not there is a document image G1 whose pattern has a match (step SF3).

When there is a document image G1 whose pattern has a match (YES in step SF3), the PC 2 acquires a handwritten information image G2 corresponding to the pattern-matched document image G1 from the memory card 4. The PC 2 pastes the handwritten information image G2 acquired from the memory card 4 to the document page from which the standard pattern has been originated (step SF4).

The PC 2 determines whether the matching process for all the document pages has been completed or not (step SF5). When it is determined that the matching process for all the document pages has not been completed (NO in step SF5), the PC 2 repeats the processes of steps SF1 to SF4.

When it is determined that the matching process for all the document pages has been completed after repeating the processes of steps SF1 to SF4 (YES in step SF5), the PC 2 determines whether or not there is any document image G1 which has not matched with any page in pattern matching (step SF6).

When it is determined that there is no document image G1 which has not matched with any page in pattern matching (NO in step SF6), the PC 2 completes the process as it is.

Even when it is determined that there is a single document image G1 (or there are plural document images G1) which has not matched with any page in pattern matching (YES in step SF6), the PC 2 carries out manual pasting by a user on each handwritten information image G2 recorded in the memory card 4 in association with each document image G1. That is, the PC 2 causes the user to designate a corresponding page, pastes the handwritten information image G2 to the designated page (step SF7) and then terminates the process.

According to the embodiment, therefore, the user can automatically paste saved handwritten information to a corresponding page and use it without a need to check himself or herself to which page of the document the handwritten information saved at the time of projecting the document corresponds.

In the embodiment, the order of acquiring a document image G1 and a handwritten information image G2 and the timing of acquiring the document image G1 can be changed as needed as per the first to third embodiments.

The foregoing description of the embodiment has discussed the process in which the projector 1 records the acquired document image G1 and handwritten information image G2 in the memory card 4. However, the system structure may be modified in such a way that the projector 1 and the PC 2 are connected together by the USB cable 31, the projector 1 outputs document images G1 and handwritten information images G2 to the PC 2 via the USB cable 31 one after another and the PC 2 stores them in the memory device 23, as per the second and third embodiments. Further, the PC 2 may execute the above-described image pasting routine in real time. In this case, image data should be generated beforehand for every page of the document and the associated document image G1 and handwritten information image G2 sent from the projector 1 should be temporarily stored in the RAM 13. Then, the PC 2 should perform pattern matching on image data of every page with the document image G1 as a standard pattern and should perform a process of pasting the handwritten information image G2 to the document page from which the pattern-matched image data has been originated.

In case where the projector 1 has functions of reading original data of a document recorded in the memory card 4 and projects the display image of the document onto the screen S based on the read data, as per the first embodiment, the projector 1 may be allowed to perform the above-described image pasting routine by the PC 2 in accordance with a predetermined operation by a user or every time an image pickup operation is performed by the user.

### (Fifth Embodiment)

The fifth embodiment of the invention is discussed next.

An image pickup apparatus according to the fifth embodiment is designed in such a way as to convert document information to a bar cord and combine the converted bar code with a document image.

The projection system of the fifth embodiment is the projection system of the first embodiment shown in Fig. 1 in which a program for executing operations to be discussed later is stored in the memory device 23 of the PC 2.

The operations of the projector 1 and PC 2 are discussed below.

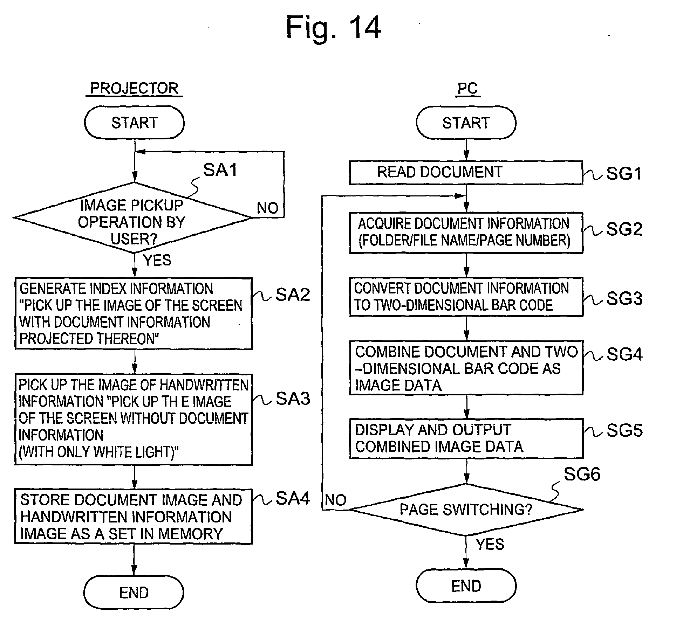

During projection of a document, the projector 1 and PC 2 operate according to a flowchart shown in Fig. 14.

The PC 2 reads data of a document, designated by a user operating the input device 24, from the memory device 23 (step SG1).

The PC 2 acquires document information included in the read data (step SG2). The document information includes a folder name indicating where data is stored, a file name and a page number. The page number indicates a page of a document to be displayed then, and is "1" at first.

Next, the PC 2 converts the acquired document information to a two-dimensional bar code which is two-dimensional information (step SG3).

The PC 2 combines the converted two-dimensional bar code to a predetermined location of a document page as display image data (step SG4).

Thereafter, the PC 2 displays the combined image data on the display device 25 and outputs it to the projector 1 via the RGB cable 3 (step SG5).

The PC 2 determines whether a page has been switched or not (step SG6).

When it is determined that a page has been switched (YES in step SG6), the PC 2 executes the processes of steps SG2 to SG5 again.

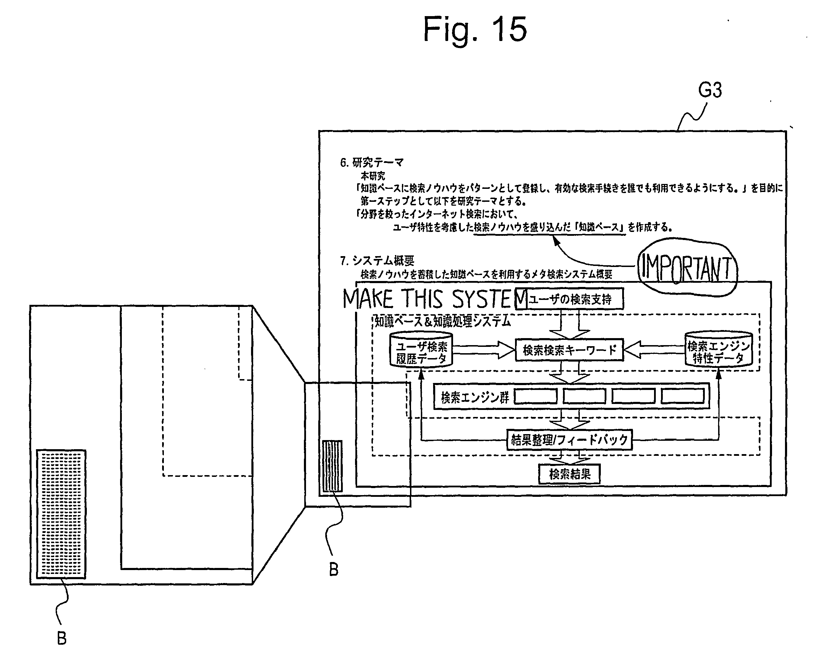

During the execution, the projector 1 projects a display image as shown in Fig. 15, based on image data output from the PC 2, on the screen S. Along with the projection, the projector 1 performs an image pickup process according to the image pickup operation done by the user, and records the picked-up image in a document-displayed state, i.e., a document image G3 having a two-dimensional bar code B at the lower left corner as shown in Fig. 15 and handwritten information image G2 as a set in the memory card 4 loaded into the main body (steps SA1 to SA4), as per the first embodiment.

When it is determined that a page has not been switched (NO in step SG6), the PC 2 terminates this process.

In this manner, a set of an associated document image G3 and handwritten information image G2 or plural sets of associated document images G3 and handwritten information images G2 are recorded in the memory card 4.

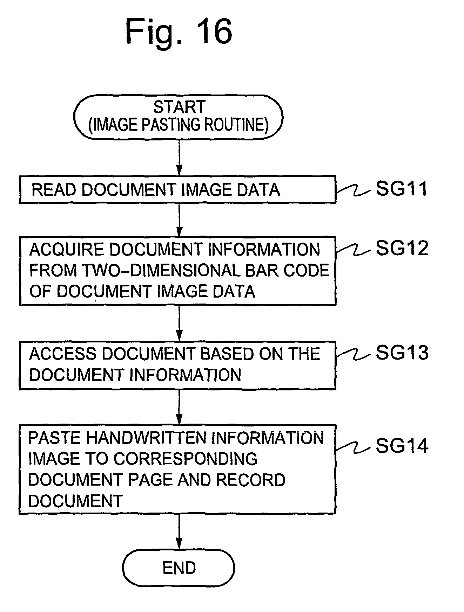

When the memory card 4 having the document image G3 and handwritten information image G2 recorded therein is loaded into the PC 2 and a command to execute an image pasting routine is selected, the PC 2 executes the image pasting routine according to a flowchart illustrated in Fig. 16.

The PC 2 first reads the document image G3 from the memory card 4 (step SG11).

The PC 2 acquires the aforementioned document information from the two-dimensional bar code B included in the read document image G3 (step SG12).

Subsequently, the PC 2 accesses a file of a document indicated by the acquired document information and reads the file of the document (step SG13).

The PC 2 pastes the handwritten information image G2 to the page corresponding to the page number included in the document information and records that data (step SG14). Then, the PC 2 repeats the above-described sequence of processes in order by the number of document images G3 and handwritten information images G2 recorded in the memory card 4.

According to the embodiment, therefore, the user can automatically paste saved handwritten information to a corresponding page and use it without a need to check himself or herself to which page of the document the handwritten information saved at the time of projecting the document corresponds. What is more, there is a merit such that information other than document information can be assembled into the two-dimensional bar code B as needed.

The foregoing description of the embodiment has illustrated an example where the two-dimensional bar code B is used as two-dimensional information of the invention. The two-dimensional information is not however limited to this bar code, but other two-dimensional information which has a relatively small area, such as an intact code, may be combined at a predetermined location of a document and displayed in that fashion.

In the embodiment, the order of acquiring a document image G1 and a handwritten information image G2 and the timing of acquiring the document image G1 can be changed as needed as per the first to fourth embodiments.

The projector 1 and the PC 2 may be connected together by the USB cable 31, so that the projector 1 outputs document images G3 and handwritten information images G2 to the PC 2 via the USB cable 31 one after another and the PC 2 stores them in the memory device 23, as per the second and third embodiments, for example.

In case where the projector 1 has functions of reading original data of a document recorded in the memory card 4 and projects the display image of the document onto the screen S based on the read data, as per the first embodiment, the projector 1 can perform the above-described image pasting routine by the PC 2 in accordance with a predetermined operation by a user.

### (Sixth Embodiment)

The sixth embodiment of the invention is discussed next.

An image pickup apparatus according to the sixth embodiment is so designed as to store display history information, such as the display time of each page.

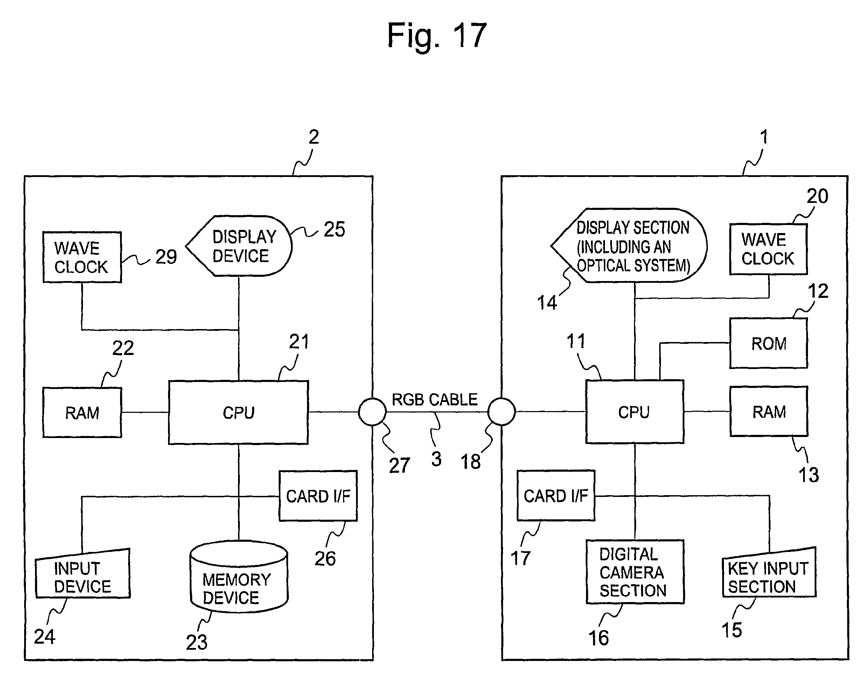

The projection system of the sixth embodiment is the projection system of the first embodiment shown in Fig. 1 in which the projector 1 and the PC 2 respectively have wave clocks 20 and 29 as shown in Fig. 17. The wave clocks 20 and 29 serve to acquire a display start time and a display end time for a document page and is used to acquire the same reference time.

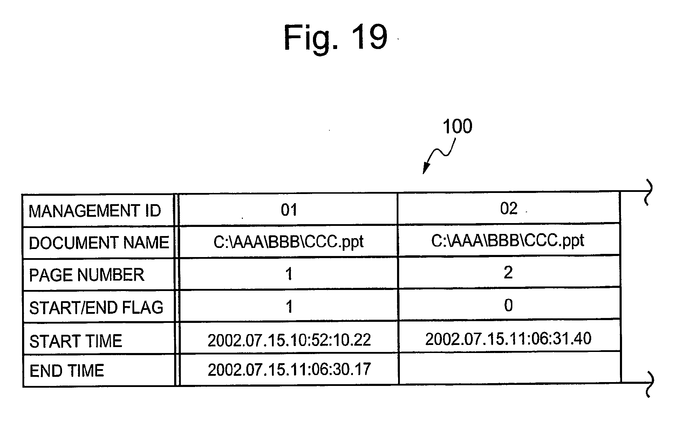

The PC 2 of the projection apparatus according to the sixth embodiment generates display history information as shown in Fig. 19. The display history information is used to retrieve a handwritten information image G2 and is comprised of individual data of a management ID, a document name, a page number, a start/end flag, a start time and end time. The management ID, which is used to identify a displayed page, is given for each page displayed. The document name is the name of a document and is comprised of a folder name and a file name. The page number indicates a page of a document. The start/end flag is data showing display in progress when "0" and showing the end of display when "1". The start time and end time respectively indicate the time when the display of a document page has started and the time when the display of a document page has ended.

The operations of the projector 1 and PC 2 according to the invention are discussed below.

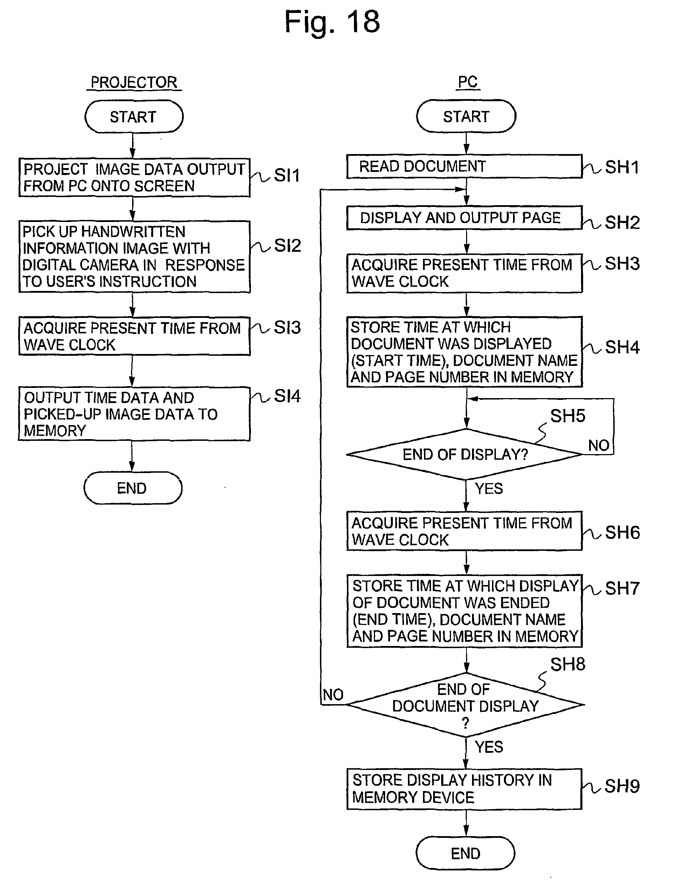

During projection of a document, the projector 1 and PC 2 operate according to a flowchart shown in Fig. 18.

The PC 2 reads data of a document, designated by a user operating the input device 24, from the memory device 23 (step SH1).

The PC 2 displays the image data of a predetermined page of the read document on the display device 25 and outputs it to the projector 1 via the RGB cable 3 (step SH2).

Subsequently, the PC 2 acquires the present time indicated by the wave clock 29 (step SH3).

The PC 2 stores the display start time of the document page, the document name and the page number in the RAM 22 (step SH4).

The PC 2 determines whether or not a display end operation, i.e., a page switching operation or a document display end operation has been performed (step SH5).

When it is determined that the display end operation has not been performed (NO in step SH5), the PC 2 stands by until the display end operation is executed.

When it is determined that the display end operation has been performed (YES in step SH5), the PC 2 acquires the present time indicated by the wave clock 29 again (step SH6).

The PC 2 stores that time as the display end time for the document page in the RAM 22 (step SH7).

The PC 2 determines whether or not the display end operation for the document has been performed (step SH8).

When it is determined that the display end operation is not the document display end operation (NO in step SH8), the PC 2 repeats the sequence of processes of steps SH2 to SH7. Accordingly, display history information 100 as shown in Fig. 19 is stored in the RAM 22 in order.

When it is determined that the display end operation is the document display end operation (YES in step SH8), the PC 2 stores the display history information 100 stored then in the RAM 22 in the memory device 23 (step SH9).

During the above operation, the projector 1 projects a display image, based on the image data output from the PC 2, on the screen S (step SI1).

Thereafter, when the user performs an image pickup operation, the projector 1 stops projecting document information and picks up the image of the screen S in a non-projection state where only white light is irradiated onto the screen S, thereby acquiring a handwritten information image G2 (see Fig. 4B) (step SI2). It is premised here that handwritten information is directly written on the screen S.

The projector 1 then acquires the present time indicated by the wave clock 20 (step SI3).

The projector 1 stores that time data and data of the handwritten information image G2 in the memory card 4 loaded into the main body (step SI4). That is, the projector 1 generates an image file in which the time acquired in step SI4 is stored as the image pickup time and records the generated image file into the memory card 4. The projector 1 and the PC 2 repeat the above-described operation every time a document page or a document to be projected is changed.

One handwritten information image G2 or plural handwritten information images G2 are recorded in the memory card 4 in this manner.

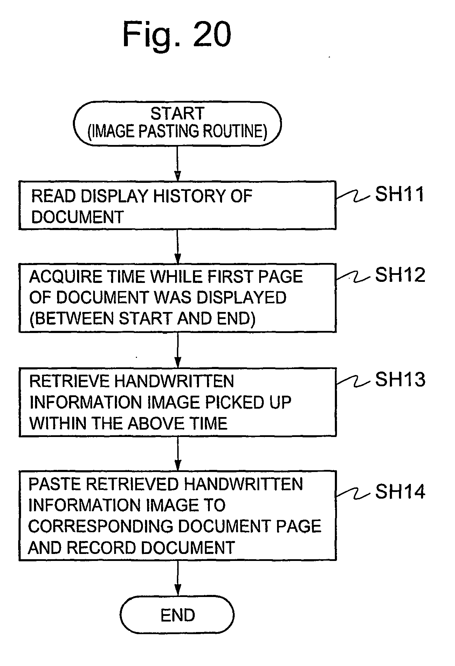

When the memory card 4 in this state is loaded and then a command to execute an image pasting routine is selected, the PC 2 executes the image pasting routine according to a flowchart illustrated in Fig. 20.

The PC 2 first reads the display history information 100, stored by the procedures explained above, from the memory device 23 (step SH11).

The PC 2 acquires the start time and the end time between which the first page of the document was displayed (step SH12).

Then, the PC 2 retrieves a handwritten information image G2 picked up within the time from the memory card 4 (step SH13).

The PC 2 pastes the retrieved handwritten information image G2 to the first page of the document and records the data in the memory device 23 (step SH14). The PC 2 performs the processes of steps SH11 to SH14 for other pages of the document. Note however that when a handwritten information image G2 picked up in the display time has not been retrieved, the PC 2 skips the process of step SH14.

According to the embodiment, therefore, the user can also automatically paste saved handwritten information to a corresponding page and use it without a need to check himself or herself to which page of the document the handwritten information saved at the time of projecting the document corresponds. As the image pickup time for the handwritten information image G2 and the display time of each page of a document which is recorded in the display history information 100 are acquired by the wave clocks 20 and 29 and are adjusted by the same reference, it is possible to accurately associate handwritten information with each page of the document. What is more, unlike in the first to fifth embodiments, the handwritten information image G2 is the only image which is acquired while the projector 1 performs image projection and recorded in the memory card 4 so that the memory card 4 can be used effectively.

In the sixth embodiment, the projector 1 and the PC 2 may be connected together by the USB cable 31, so that the projector 1 outputs handwritten information images G2 to the PC 2 one after another and the PC 2 stores the handwritten information images G2 in the memory device 23, as per the second and third embodiments, for example.

In case where the projector 1 has functions of reading original data of a document recorded in the memory card 4 and projects the display image of the document onto the screen S based on the read data, as per the first embodiment, the projector 1 can perform the above-described image pasting routine by the PC 2 in accordance with a predetermined operation by a user. In this case, even if the wave clock 20 is an ordinary clock whose time is adjusted by a user, it is possible to accurately associate handwritten information with each page of the document as in the sixth embodiment.

### (Seventh Embodiment)

The seventh embodiment of the invention is discussed next. An image pickup apparatus according to the seventh embodiment is so designed as to acquire a document by using management information which manages the locations for a document, a document image and a handwritten information image as index information.

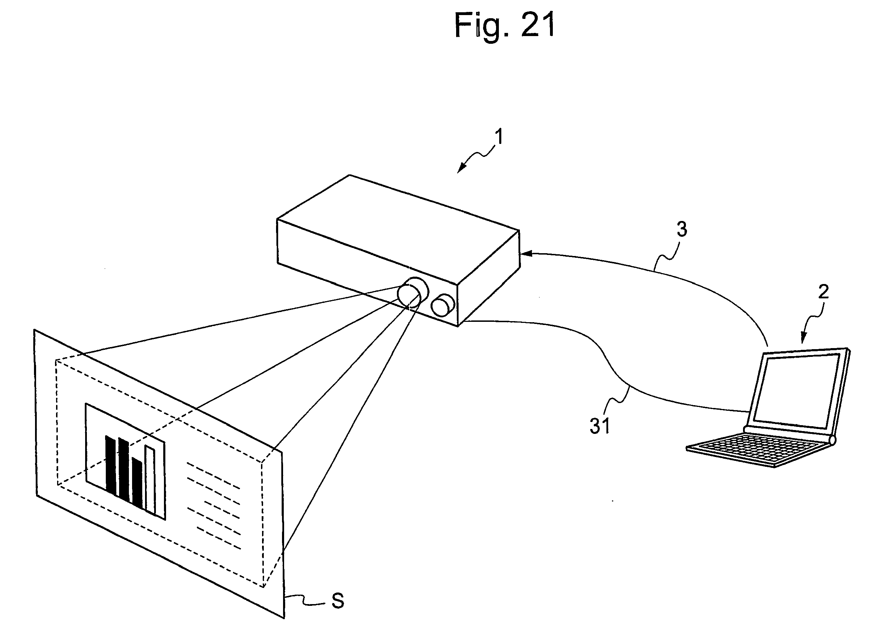

Fig. 21 is a structural diagram of a projection system illustrating the embodiment.

This projection system, like that of the second embodiment shown in Fig. 5, comprises a projector 1 and PC 2 connected together by an RGB cable 3 and USB cable 31. It is to be noted however that the card interface circuits 17 and 26 shown in Fig. 21 are omitted from the projector 1 and PC 2 of this embodiment.

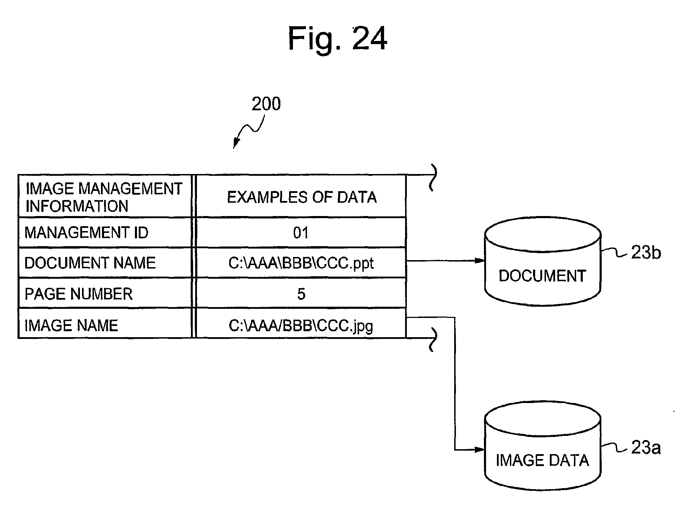

The memory device 23 of the PC 2 includes an image data memory section 23a and a document data memory section 23b. The image data memory section 23a stores image data. The document data memory section 23b stores document data. The memory device 23 stores image management information 200 as shown in Fig. 24. The image management information 200 includes a management ID, a document name, a page number and an image name. The management ID is information for specifying document data and image data. The document name is a name to designate document data. The document name is comprised of a memory location in the memory device 23 where document data is stored and a file name. In the example shown in Fig. 24, "C:\AAA\BBB\" indicates the path to the memory location to store document data by a folder name and "CCC.ppt" indicates the file name of the document data.

The page number indicates the page number of a document page to be displayed and is "1" at first. In the example shown in Fig. 24, the page number is "5". The document information is comprised of a folder name which is the storage location for data, a file name and a page number. In the example shown in Fig. 24, the folder name "BBB", the file name "CCC.ppt" and the page number "5" are the document information of this document.

The image name is a name to designate image data. The image name is comprised of a memory location in the memory device 23 where image data is stored and a file name. In the example shown in Fig. 24, "C:\AAA\DDD\" indicates the path to the memory location to store image data by a folder name and "01. JPG" indicates the file name of the image data.

The operations of the projector 1 and the PC 2 according to the invention are discussed below.

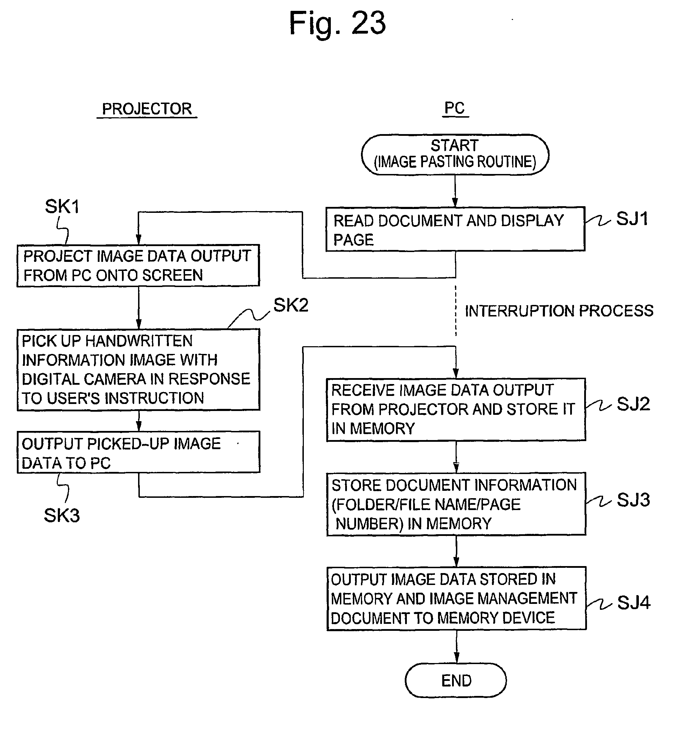

During projection of a document, the PC 2 and the projector 1 execute an image management information generating routine according to a flowchart shown in Fig. 23.

The PC 2 reads data of a document, designated by a user operating the input device 24, from the memory device 23, displays the image data of a predetermined page on the display device 25 and outputs it to the projector 1 via the RGB cable 3 (step SJ1).

Meanwhile, the projector 1 projects a display image, based on the image data output from the PC 2, on the screen S (step SK1).

Thereafter, when the user performs an image pickup operation, the projector 1 stops image projection, irradiates white light alone onto the screen S, and picks up the image of the screen S in a non-projection state. Then, the projector 1 acquires a handwritten information image G2 (see Fig. 4B) (step SK2). It is premised here that handwritten information is directly written on the screen S.

The projector 1 outputs data of the handwritten information image G2 to the PC 2 via the USB cable 31 (step SK3).

The above-described operation is repeated every time a document page or a document to be projected is changed.

As image data is output from the projector 1, the PC 2 stores the input image data in the RAM 22 by an interruption process (step SJ2).

Further, the PC 2 stores document information included in the original data of the document displayed then in the RAM 22 in association with the image data of the handwritten information image G2 (step SJ3).

Thereafter, the PC 2 stores the image data of the handwritten information image G2 stored in the RAM 22 into the image data memory section 23a, designates an image name and stores the image management information 200 as shown in Fig. 24 into the memory device 23 (step SJ4).

Then, the PC 2 repeats the sequence of processes and switches a page to be displayed and output when there is a page switching operation during the repetition.

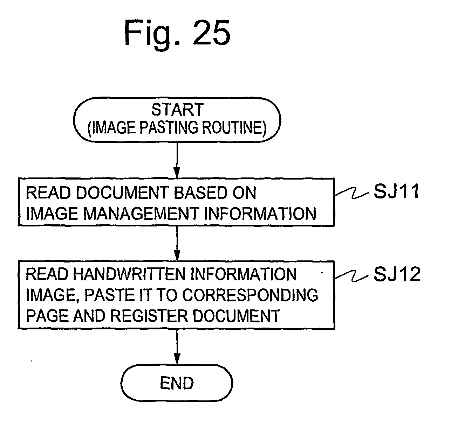

As the image management information 200 concerning one page or plural pages is recorded in the memory card 4 in this manner and a command which causes the PC 2 to execute an image pasting routine is selected by the user, the PC 2 executes the image pasting routine according to a flowchart illustrated in Fig. 25.

The PC 2 reads the image management information 200 from the memory device 23 (step SJ11).

The PC 2 reads image data indicated in association with each management ID of the image management information 200, i.e., image data of the handwritten information image G2, from the memory device 23. The PC 2 pastes the read handwritten information image G2 to a document page with a page number corresponding to the image name and records the data of the document pasted with the handwritten information image G2 into the memory device 23 (step SJ12).

According to the embodiment, therefore, the user can also automatically paste saved handwritten information to a corresponding page and use it without a need to check himself or herself to which page of the document the handwritten information saved at the time of projecting the document corresponds. As the handwritten information image G2 is the only image which is acquired while the projector 1 performs image projection and recorded in the memory card 4, the memory card 4 can be used effectively, as per the sixth embodiment.

In case where, unlike in the seventh embodiment, the projector 1 has functions of reading original data of a document recorded in the memory card 4 and projects the display image of the document onto the screen S based on the read data, the projector 1 may be allowed to perform all the operations of the PC 2 described above.

### (Eighth Embodiment)

The eighth embodiment of the invention is discussed next. This embodiment is the projection system of the second embodiment as shown in Figs. 5 and 6 which is so modified as to affix index related information to the property of a handwritten information image and record the data in the memory card.

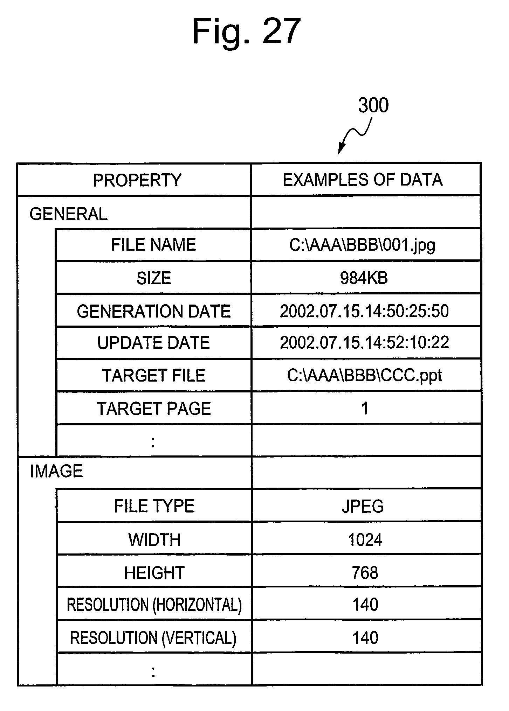

As an image projected on the screen S is picked up, the projector 1 according to the eighth embodiment generates a property (attribute) 300 of image data as shown in Fig. 27 acquired by image pickup. The property 300 is comprised of general information and image information. The general information includes information about image data acquired by image pickup, i.e., a file name, size, date of generation and date of update. The projector 1 adds a target file and a target page as added data to the property 300.

The target file indicates a document to which an acquired handwritten information image G2 is to be added, and is comprised of a folder name where document data is stored and a file name. In the example shown in Fig. 27, the folder name of the target file is "C:\AAA\BBB\" and the file name is "CCC.ppt".

The target page indicates a page of a document to which the acquired handwritten information image G2 is to be added. In the example shown in Fig. 27, the target page is page "1".

During projection of a document, as the PC 2 outputs document information and the RAM 13 stores the document information output from the PC 2, the projector 1 obtains data on the target file and the document page from the document information stored in the RAM 13, adds the data to the property 300 and stores the property 300 in the memory card 4.

The operations of the projector 1 and PC 2 are discussed below.

During projection of a document, the PC 2 and the projector 1 operate according to a flowchart shown in Fig. 25.

As a user designates a document by operating the input device 24, the PC 2 reads data of the designated document from the memory device 23, displays the image data of a predetermined page on the display device 25 and outputs it to the projector 1 via the RGB cable 3 (step SL1).

Further, the PC 2 sends document information included in the original data of the then displayed document, i.e., a folder name where data is stored, a file name and a page number, to the projector 1 via the USB cable 31 (step SL2).

During the above operation, the projector 1 projects a display image, based on the image data output from the PC 2, on the screen S (step SM1).

Further, the projector 1 acquires the document information output from the PC 2 and stores it in the RAM 13 (step SM2).

Thereafter, when the user performs an image pickup operation, the projector 1 stops projecting document information and picks up the image of the screen S in a non-projection state where only white light is irradiated onto the screen S, thereby acquiring a handwritten information image G2 (see Fig. 4B) (step SM3). It is premised here that handwritten information is directly written on the screen S.

Then, the projector 1 adds the document information stored in the RAM 13 to the property of the image data acquired by image pickup and records the image file in the memory card 4 loaded into the main body (step SM4). The above-described operation is repeated every time a document page or a document to be projected is changed.

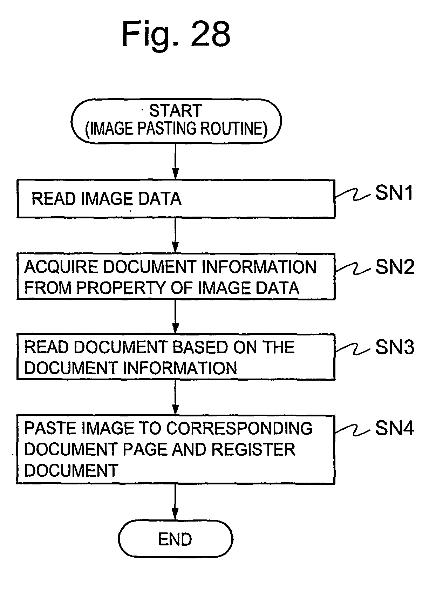

When the memory card 4 where one handwritten information image G2 or plural handwritten information images G2 are recorded is loaded and then a command to execute an image pasting routine is selected by a user, the PC 2 executes the image pasting routine according to a flowchart illustrated in Fig. 28.

The PC 2 first reads the data (image file) of a handwritten information image G2 from the memory card 4 (step SN1).

The PC 2 acquires data on a target file and a target page from the property of the data of the read handwritten information image G2 (step SN2).

Subsequently, the PC 2 reads a document corresponding to the target file from the memory device 23 (step SN3).

The PC 2 pastes the handwritten information image G2 to the document page corresponding to the target page and records the data of that document in the memory device 23 (step SN4). Then, the above-described sequence of processes is repeated by the number of handwritten information images G2 recorded in the memory card 4.

According to the embodiment, therefore, the user can also automatically paste saved handwritten information to a corresponding page and use it without a need to check himself or herself to which page of the document the handwritten information saved at the time of projecting the document corresponds. As the handwritten information image G2 is the only image which is acquired while the projector 1 performs image projection and recorded in the memory card 4, the memory card 4 can be used effectively, as per the sixth and seventh embodiments.

What is more, as a target file and a target page to the property of the handwritten information image G2, it is possible to know a document page corresponding to the handwritten information image G2 directly from the handwritten information image G2. This brings about a merit of further improving the usability.

Although the projector 1 records an acquired handwritten information image G2 in the memory card 4 in this embodiment, a modification may be made in such a way that the projector 1 outputs handwritten information images G2 one after another via the USB cable 31 to the PC 2 which in turns stores the handwritten information images G2 in the memory device 23.

In case where the projector 1 has functions of reading original data of a document recorded in the memory card 4 and projects the display image of the document onto the screen S based on the read data, the projector 1 may be allowed to perform the image pasting routine.

The foregoing descriptions of the second to eighth embodiments have been given mainly of the case where the PC 2 has a function of automatically pasting a handwritten information image G2 to a predetermined page of a corresponding document. Instead, the PC 2 may be given a function of simply informing a user of a page corresponding to a handwritten information image G2 by an arbitrary method, such as displaying a page number or a page title, in each embodiment. This case also provides such an effect that when using handwritten information directly written on the screen S, a user can easily know in which projection of which document the handwritten information was written.

Further, the foregoing descriptions of the first to eighth embodiments have been given mainly of the example where the invention is worked out by using the projector 1 incorporating the digital camera section 16. The invention can however be worked out as the structure in which a separate digital camera is externally mounted onto the projector that has, for example, only a document projecting function. In this case, the projector 1 sends a predetermined shutter signal to the digital camera, as needed, to control the image pickup operation of the digital camera.

In the above-described embodiments, the CPU 21 generates a combined image by pasting a handwritten information image G2 to a document image. However, the projector 1 can acquire a document image G1 already handwritten as shown in Fig. 4A from the memory card 4 and project it directly.

What is to be recorded on the screen S is not limited to handwritten information but includes, for example, a writing pasted on the screen S.

The foregoing descriptions of the embodiments have been given of the example where the PC 2 acquires a document from a handwritten information image G2. But, the PC 2 can acquire a handwritten information image G2 from a document. In this case, index information indicating the storage location for a handwritten information image G2 corresponding to a document is stored in the file of the document.

The above-described embodiments are intended to illustrate the present invention, not to limit the scope of the present invention. The scope of the present invention is shown by the attached claims rather than the embodiments.

This application is based on Japanese Patent Application No. 2002-366005 filed on December 18, 2002 and including specification, claims, drawings and summary.

## Claims

1. A projection apparatus comprising:
a projection section (14) for projecting a document image onto a screen (S);
an image pickup section (16) for picking up images of said screen (S); and
a processor section (11) for controlling the projection section (14) and the image pickup section (16);
wherein
the processor section (11) is adapted to acquire a first picked-up image (G1) by causing said projection section (14) to project said document image and causing said image pickup section (16) to pick up the image, and is further adapted to acquire a second picked-up image (G2) of information recorded on said screen (S) by causing said projection section (14) to stop projecting said document image and causing said image pickup section (16) to pick up the image; and by comprising
an image memory section (4) for storing said first picked-up image (G1) and said second picked-up image (G2) in association with each other; and
an image processing section (21) for identifying a document, from which the document image was generated, based on relationship information derived from the first picked-up image (G1), said relationship information indicating a correspondence relationship between said document and said second picked-up image (G2), and for pasting said second picked-up image (G2) to the identified document, thereby generating an amended document.

2. The projection apparatus according to claim 1, wherein said image processing section (21) is adapted to identify the document by obtaining a correlation between patterns of said first picked-up image (G1) and said document.

3. The projection apparatus according to claim 1, wherein said document comprises a plurality of pages, and said processor section (11) is adapted to acquire page number information indicating a page of said document from said first picked-up image (G1) and store said acquired page number information as said relationship information in said image memory section (4).

4. The projection apparatus according to claim 3, wherein said processor section (11) is adapted to acquire the page number information by performing character recognition on character images included in said first picked-up image (G1).

5. The projection apparatus according to claim 4, further comprising a document memory section (23) which is adapted to store said document and document information on said document, and
wherein said processor section (11) is adapted to acquire position information indicating a print position of a page number in said document from said document information stored in said document memory section (23), discriminate a page number position based on said acquired position information and acquire said page number information by performing character recognition on character images at said discriminated page number position.

6. The projection apparatus according to claim 5, wherein said processor section (11) is adapted to perform image conversion of said document information on said document into a bar code as said relationship information, combine said converted bar code with said first picked-up image (G1) stored in said image memory section (4), and store said combined image in said image memory section (4).

7. The projection apparatus according to claim 1, wherein said processor section (11) is adapted to acquire a display start time and a display end time, at which said document image is projected, and a pick-up time, at which the second picked-up image (G2) is picked up, as said relationship information, and is adapted to store said display start time, said display end time, and said pick-up time in said image memory section (4).

8. The projection apparatus according to claim 1, further comprising a management information memory section (23) which is adapted to store management information for managing storage locations of said document, said first picked-up image (G1) and said second picked-up image (G2), and
wherein said image processing section (21) is adapted to use said management information as said relationship information.

9. The projection apparatus according to claim 1, wherein said processor section (11) is adapted to store said relationship information added to a property of said second picked-up image (G2) in said image memory section (4).

10. The projection apparatus according to claim 1, wherein said processor section (11) is adapted to cause said projection section (14) to project said first picked-up image (G1) stored in said image memory section (4) onto said screen (S).

11. An image acquisition method comprising the steps of
projecting a document image onto a screen (S);
picking up images of said screen (S); and
controlling the projection (14) and the pickup section (16) by a processor section (11);
wherein
acquiring (SA2) a first picked-up image (G1) by projecting said document image and picking up the image;
acquiring (SA3) a second picked-up image (G2) of information recorded on said screen (S) by stopping projecting said document image and picking up the image;
storing (SA4) said first picked-up image (G1) and said second picked-up image (G2) in association with each other;
identifying a document, from which the document image was generated, based on relationship information derived from the first picked-up image (G1), said relationship information indicating a correspondence relationship between said document and said second picked-up image (G2); and
pasting (SC3) said second picked-up image (G2) to the identified document, thereby generating an amended document.

12. The image acquisition method according to claim 11, wherein the document is identified by obtaining (SF2) a correlation between patterns of said first picked-up image (G1) and said document.

13. The image acquisition method according to claim 11, wherein said document comprises a plurality of pages, said method further comprising the steps of:
acquiring (SB4) page number information indicating a page of said document from said first picked-up image (G1); and
storing (SB5) said acquired page number information as said relationship information.

14. The image acquisition method according to claim 13, wherein the page number information is acquired by performing character recognition on character images included in said first picked-up image (G1).

15. The image acquisition method according to claim 14, further comprising the steps of
storing said document and document information on said document;
acquiring (SB2) position information indicating a print position of a page number in said document from the stored document information;
discriminating (SB3) a page number position based on said acquired position information; and
acquiring (SB4) said page number information by performing character recognition on character images at said discriminated page number position.

16. The image acquisition method according to claim 15, further comprising the steps of
performing image conversion (SG3) of said document information on said document into a bar code as said relationship information;
combining (SG4) said converted bar code with said stored first picked-up image (G1); and
storing (SG5) said combined image.

17. The image acquisition method according to claim 11, further comprising the steps of
acquiring (SI3, SH3, SH6) a display start time and a display end time, at which said document image is projected, and a pick-up time, at which the second picked-up image (G2) is picked up, as said relationship information; and
storing (S14, SH7) said display start time, said display end time, and said pick-up time.

18. The image acquisition method according to claim 11, further comprising the step of storing (SJ3) management information for managing storage locations of said document, said first picked-up image (G1) and said second picked-up image (G2), and wherein said management information is used as said relationship information.

19. The image acquisition method according to claim 11, further comprising the step of storing (SM4) said relationship information added to a property of said second picked-up image (G2).

20. The image acquisition method according to claim 11, further comprising the step of projecting said stored first picked-up image (G1) onto said screen (S).

## Patentansprüche

1. Projektionsvorrichtung, die umfasst:
einen Projektionsabschnitt (14) zum Projizieren eines Dokumentbildes auf eine Projektionsfläche (S);
einen Bildaufnahmeabschnitt (16) zum Aufnehmen von Bildern der Projektionsfläche (S);
einen Verarbeitungsabschnitt (11) zum Steuern des Projektionsabschnitts (14) und des Bildaufnahmeabschnitts (16);
wobei
der Verarbeitungsabschnitt (11) so eingerichtet ist, dass er ein erstes aufgenommenes Bild (G1) erfasst, indem er den Projektionsabschnitt (14) veranlasst, das Dokumentbild zu projizieren, und den Bildaufnahmeabschnitt (16) veranlasst, das Bild aufzunehmen, und des Weiteren so eingerichtet ist, dass er ein zweites aufgenommenes Bild (G2) auf der Projektionsfläche (S) aufgezeichneter Informationen erfasst, indem er den Projektionsabschnitt (14) veranlasst, die Projektion des Dokumentenbildes zu beenden, und den Bildaufnahmeabschnitt (16) veranlasst, das Bild aufzunehmen; und wobei er umfasst:
einen Bildspeicherabschnitt (4) zum Speichern des ersten aufgenommenen Bildes (G1) und des zweiten aufgenommenen Bildes (G2) in Verbindung miteinander; und
einen Bildverarbeitungsabschnitt (21) zum Identifizieren eines Dokumentes, von dem des Dokumentenbild erzeugt wurde, auf Basis von dem ersten aufgenommenen Bild (G1) hergeleiteter Beziehungsinformationen, wobei die Beziehungsinformationen eine Entsprechungsbeziehung zwischen dem Dokument und dem zweiten aufgenommenen Bild (G2) anzeigen, und zum Einfügen des zweiten aufgenommenen Bildes (G2) in das identifizierte Dokument, um so ein geändertes Dokument zu erzeugen.

2. Projektionsvorrichtung nach Anspruch 1, wobei der Bildverarbeitungsabschnitt (21) so eingerichtet ist, dass er das Dokument identifiziert, indem er eine Korrelation zwischen Mustern des ersten aufgenommenen Bildes (G1) und des Dokumentes ermittelt.

3. Projektionsvorrichtung nach Anspruch 1, wobei das Dokument eine Vielzahl von Seiten umfasst und der Verarbeitungsabschnitt (11) so eingerichtet ist, dass er Seitenzahlinformationen, die eine Seite des Dokumentes anzeigen, von dem ersten aufgenommenen Bild (G1) erfasst, und die erfasste Seitenzahlinformationen als die Beziehungsinformationen in dem Bildspeicherabschnitt (4) speichert.

4. Projektionsvorrichtung nach Anspruch 3, wobei der Verarbeitungsabschnitt (11) so eingerichtet ist, dass er die Seitenzahlinformationen erfasst, indem er Zeichenerkennung an Zeichen-Bildern durchführt, die in dem ersten aufgenommenen Bild (G1) enthalten sind.

5. Projektionsvorrichtung nach Anspruch 4, die des Weiteren einen Dokumentenspeicherabschnitt (23) umfasst, der so eingerichtet ist, dass er das Dokument und Dokumentinformationen über das Dokument speichert, und
wobei der Verarbeitungsabschnitt (11) so eingerichtet ist, dass er Positionsinformationen, die eine Druckposition einer Seitenzahl in dem Dokument anzeigen, aus den in dem Dokumentenspeicherabschnitt (23) gespeicherten Dokumentinformationen erfasst, eine Seitenzahlposition auf Basis der erfassten Positionsinformationen unterscheidet und die Seitenzahlinformationen erfasst, indem er Zeichenerkennung an Zeichen-Bildern an der Seitenzahlposition durchführt.

6. Projektionsvorrichtung nach Anspruch 5, wobei der Verarbeitungsabschnitt (11) so eingerichtet ist, dass er Bildumwandlung der Dokumentinformationen über das Dokument in einen Strichcode als die Beziehungsinformation durchführt, den umgewandelten Strichcode mit dem ersten aufgenommenen Bild (G1) kombiniert, das in dem Bildspeicherabschnitt (4) gespeichert ist, und das kombinierte Bild in dem Bildspeicherabschnitt (4) speichert.

7. Projektionsvorrichtung nach Anspruch 1, wobei der Verarbeitungsabschnitt (11) so eingerichtet ist, dass er eine Anzeige-Anfangszeit und eine Anzeige-Endzeit, zu der das Dokumentbild projiziert wird, sowie eine Aufnahmezeit, zu der das zweite aufgenommene Bild (G2) aufgenommen wird, als die Beziehungsinformationen erfasst, und so eingerichtet ist, dass er die Anzeige-Anfangszeit, die Anzeige-Endzeit und die Aufnahmezeit in dem Bildspeicherabschnitt (4) speichert.

8. Projektionsvorrichtung nach Anspruch 1, die des Weiteren einen Verwaltungsinformations-Speicherabschnitt (23) umfasst, der so eingerichtet ist, dass er Verwaltungsinformationen zum Verwalten von Speicherorten des Dokumentes, des ersten aufgenommenen Bildes (G1) und des zweiten aufgenommenen Bildes (G2) speichert, und
wobei der Bildverarbeitungsabschnitt (21) so eingerichtet ist, dass er die Verwaltungsinformationen als die Beziehungsinformation verwendet.

9. Projektionsvorrichtung nach Anspruch 1, wobei der Verarbeitungsabschnitt (11) so eingerichtet ist, dass er die Beziehungsinformationen zu einer Eigenschaft des zweiten aufgenommenen Bildes (G2) hinzugefügt in dem Bildspeicherabschnitt (4) speichert.

10. Projektionsvorrichtung nach Anspruch 1, wobei der Verarbeitungsabschnitt (11) so eingerichtet ist, dass er den Projektionsabschnitt (14) veranlasst, das erste aufgenommene Bild (G1), das in dem Bildspeicherabschnitt (4) gespeichert ist, auf die Projektionsfläche (S) zu projizieren.

11. Bilderfassungsverhahren, das die folgenden Schritte umfasst:
Projizieren eines Dokumentenbildes auf eine Projektionsfläche (S);
Aufnehmen von Bildern der Projektionsfläche (S9);
Steuern des Projektionsabschnitts (14) und des Aufnahmeabschnitts (16) mit einem Verarbeitungsabschnitt (11);
wobei
ein erstes aufgenommenes Bild (G1) erfasst wird (SA2), indem das Dokumentbild projiziert und das Bild aufgenommen wird;
ein zweites aufgenommenes Bild (G2) auf der Projektionsfläche (S) aufgezeichneter Informationen erfasst wird (SA3), indem die Projektion des Dokumentenbildes beendet wird und das Bild aufgenommen wird;
das erste aufgenommene Bild (G1) und das zweite aufgenommene Bild (G2) in Verbindung miteinander gespeichert werden (SA4);
ein Dokument, von dem das Dokumentbild erzeugt wurde, auf Basis von dem ersten aufgenommenen Bild (G1) hergeleiteter Beziehungsinformationen identifiziert wird, wobei die Beziehungsinformationen eine Entsprechungsbeziehung zwischen dem Dokument und dem zweiten aufgenommenen Bild (G2) zeigen;
das zweite aufgenommene Bild (G2) in das identifizierte Dokument eingefügt wird (SC3), um so ein geändertes Dokument zu erzeugen.

12. Bilderfassungsverfahren nach Anspruch 11 wobei das Dokument identifiziert wird, indem eine Korrelation zwischen Mustern des ersten aufgenommenen Bildes (G1) und des Dokumentes ermittelt wird (SF2).

13. Bilderfassungsverfahren nach Anspruch 11, wobei das Dokument eine Vielzahl von Seiten umfasst und das Verfahren des Weiteren die folgenden Schritte umfasst:
Erfassen (SB4) von Seitenzahlinformationen, die eine Seite des Dokumentes anzeigen, von dem ersten aufgenommenen Bild (G1); und
Speichern (SB5) der erfassten Seitenzahlinformationen als die Beziehungsinformationen.

14. Bilderfassungsverfahren nach Anspruch 13, wobei die Seitenzahlinformationen erfasst werden, indem Zeichenerkennung an Zeichen-Bildern durchgeführt werden, die in dem ersten aufgenommenen Bild (G1) enthalten sind.

15. Bilderfassungsverfahren nach Anspruch 14, das des Weiteren die folgenden Schritte umfasst:
Speichern des Dokumentes und von Dokumentinformationen über das Dokument;
Erfassen (SB2) von Positionsinformationen, die eine Druckposition einer Seitenzahl in dem Dokument anzeigen, aus den gespeicherten Dokumentinformationen;
Unterscheiden (SB3) einer Seitenzahlposition auf Basis der erfassten Positionsinformationen; und
Erfassen (SB4) der Seitenzahlinformation durch Durchführen von Zeichenerkennung an Zeichen-Bildern an der unterschiedenen Seitenzahlposition.

16. Bilderfassungsverfahren nach Anspruch 15, das des Weiteren die folgenden Schritte umfasst:
Durchführen von Bildumwandlung (SG3) der Dokumentinformationen über das Dokument in einen Strichcode als die Beziehungsinformationen;
Kombinieren (SG4) des umgewandelten Strichcodes mit dem ersten aufgenommenen Bild (G1); und
Speichern (SG5) des kombinierten Bildes.

17. Bilderfassungsverfahren nach Anspruch 11, das des Weiteren die folgenden Schritte umfasst:
Erfassen (SI3, SH3, SH6) einer Anzeige-Anfangszeit und einer Anzeige-Endzeit, zu der das Dokumentbild produziert wird, sowie einer Aufnahmezeit, zu der das zweite aufgenommene Bild (G2) aufgenommen wird, als die Beziehungsinformationen; und
Speichern (SI4, SH7) der Anzeige-Anfangszeit, der Anzeige-Endzeit und der Aufnahmezeit.

18. Bilderfassungsverfahren nach Anspruch 11, das des Weiteren den Schritt des Speicherns (SJ3) von Verwaltungsinformationen zum Verwalten von Speicherorten des Dokumentes, des ersten aufgenommenen Bildes (G1) und des zweiten aufgenommenen Bildes (G2) umfasst, und wobei die Verwaltungsinformationen als die Beziehungsinformationen verwendet werden.

19. Bilderfassungsverfahren nach Anspruch 11, das des Weiteren den Schritt des Speicherns (SM4) der zu einer Eigenschaft des zweiten aufgenommenen Bildes (G2) hinzugefügten Beziehungsinformationen umfasst.

20. Bilderfassungsverfahren nach Anspruch 11, das des Weiteren den Schritt des Projizierens des gespeicherten ersten aufgenommenen Bildes (G1) auf die Projektionsfläche (S) umfasst.

## Revendications

1. Appareil de projection comprenant :
une section de projection (14) pour projeter une image de document sur un écran (S) ;
une section de capture d'image (16) pour capturer des images dudit écran (S) ; et
une section de processeur (11) pour commander la section de projection (14) et la section de capture d'image (16);
dans lequel
la section de processeur (11) est adaptée pour acquérir une première image capturée (G1) en commandant ladite section de projection (14) pour projeter ladite image de document et en commandant ladite section de capture d'image (16) pour capturer l'image, et est adaptée en outre pour acquérir une deuxième image capturée (G2) d'informations enregistrées sur ledit écran (S) en commandant ladite section de projection (14) pour arrêter de projeter ladite image de document et en commandant ladite section de capture d'image (16) pour capturer l'image ; et comprenant :
une section de mémoire d'image (4) pour mémoriser ladite première image capturée (G1) et ladite deuxième image capturée (G2) en association entre elles ; et
une section de traitement d'image (21) pour identifier un document, à partir duquel l'image de document a été générée, sur la base d'informations de relation obtenues à partir de la première image capturée (G1), lesdites informations de relation indiquant une relation de correspondance entre ledit document et ladite deuxième image capturée (G2), et pour coller ladite deuxième image capturée (G2) sur document identifié, en générant ainsi un document modifié.

2. Appareil de projection selon la revendication 1, dans lequel ladite section de traitement d'image (21) est adaptée pour identifier le document en obtenant une corrélation entre des motifs de ladite première image capturée (G1) et dudit document.

3. Appareil de projection selon la revendication 1, dans lequel ledit document comprend une pluralité de pages et ladite section de processeur (11) est adaptée pour acquérir des informations de numéro de page indiquant une page dudit document à partir de ladite première image capturée (G1) et mémoriser lesdites informations de numéro de page acquises comme lesdites informations de relation dans ladite section de mémoire d'image (4).

4. Appareil de projection selon la revendication 3, dans lequel ladite section de processeur (11) est adaptée pour acquérir les informations de numéro de page en effectuant une reconnaissance de caractères sur des images de caractères incluses dans ladite première image capturée (G1).

5. Appareil de projection selon la revendication 4, comprenant en outre une section de mémoire de document (23) qui est adaptée pour mémoriser ledit document et des informations de document sur ledit document, et
dans lequel ladite section de processeur (11) est adaptée pour acquérir des informations de position indiquant une position d'impression d'un numéro de page dans ledit document à partir desdites informations de document mémorisées dans ladite section de mémoire de document (23), discriminer une position de numéro de page sur la base desdites informations de position acquises et acquérir lesdites informations de numéro de page en effectuant une reconnaissance de caractères sur des images de caractères au niveau de ladite position de numéro de page discriminée.

6. Appareil de projection selon la revendication 5, dans lequel ladite section de processeur (11) est adaptée pour effectuer une conversion d'image desdites informations de document sur ledit document en un code à barres comme lesdites informations de relation, combiner ledit code à barres converti avec ladite première image capturée (G1) mémorisée dans ladite section de mémoire d'image (4) et mémoriser ladite image combinée dans ladite section de mémoire d'image (4).

7. Appareil de projection selon la revendication 1, dans lequel ladite section de processeur (11) est adaptée pour acquérir un instant de début d'affichage et un instant de fin d'affichage, auxquels ladite image de document est projetée, et un instant de capture, auquel la deuxième image capturée (G2) est capturée, comme lesdites informations de relation, et mémoriser ledit instant de début d'affichage, ledit instant de fin d'affichage et ledit instant de capture dans ladite section de mémoire d'image (4).

8. Appareil de projection selon la revendication 1, comprenant en outre une section de mémoire d'informations de gestion (23) qui est adaptée pour mémoriser des informations de gestion pour gérer des emplacements de mémoire dudit document, ladite première image capturée (G1) et ladite deuxième image capturée (G2), et
dans lequel ladite section de traitement d'image (21) est adaptée pour utiliser lesdites informations de gestion comme lesdites informations de relation.

9. Appareil de projection selon la revendication 1, dans lequel ladite section de processeur (11) est adaptée pour mémoriser lesdites informations de relation ajoutées à une propriété de ladite deuxième image capturée (G2) dans ladite section de mémoire d'image (4).

10. Appareil de projection selon la revendication 1, dans lequel ladite section de processeur (11) est adaptée pour commander ladite section de projection (14) pour projeter ladite première image capturée (G1) mémorisée dans ladite section de mémoire d'image (4) sur ledit écran (S).

11. Procédé d'acquisition d'image comprenant les étapes consistant à :
projeter une image de document sur un écran (S);
capturer des images dudit écran (S) ; et
commander la section de projection (14) et la section de capture (16) par une section de processeur (11) ;
où
acquérir (SA2) une première image capturée (G1) en projetant ladite image de document et en capturant l'image,
acquérir (SA3) une deuxième image capturée (G2) d'informations enregistrées sur ledit écran (S) en arrêtant de projeter ladite image de document et en capturant l'image ;
mémoriser (SA4) ladite première image capturée (G1) et ladite deuxième image capturée (G2) en association entre elles;
identifier un document, à partir duquel l'image de document a été générée, sur la base d'informations de relation obtenues à partir de la première image capturée (G1), lesdites informations de relation indiquant une relation de correspondance entre ledit document et ladite deuxième image capturée (G2) ; et
coller (SC3) ladite deuxième image capturée (G2) sur document identifié, en générant ainsi un document modifié.

12. Procédé d'acquisition d'image selon la revendication 11, dans lequel le document est identifié en obtenant (SF2) une corrélation entre des motifs de ladite première image capturée (G1) et dudit document.

13. Procédé d'acquisition d'image selon la revendication 11, dans lequel ledit document comprend une pluralité de pages, ledit procédé comprenant en outre les étapes consistant à :
acquérir (SB4) des informations de numéro de page indiquant une page dudit document à partir de ladite première image capturée (G1) ;
mémoriser (SB5) lesdites informations de numéro de page acquises comme lesdites informations de relation.

14. Procédé d'acquisition d'image selon la revendication 13, dans lequel les informations de numéro de page sont acquises en effectuant une reconnaissance de caractères sur des images de caractères incluses dans ladite première image capturée (G1).

15. Procédé d'acquisition d'image selon la revendication 14, comprenant en outre les étapes consistant à :
mémoriser ledit document et des informations de document sur ledit document ;
acquérir (SB2) des informations de position indiquant une position d'impression d'un numéro de page dans ledit document à partir desdites informations de position ;
discriminer (SB3) une position de numéro de page sur la base desdites informations de position acquises ; et
acquérir (SB4) lesdites informations de numéro de page en effectuant une reconnaissance de caractères sur des images de caractères au niveau de ladite position de numéro de page discriminée.

16. Procédé d'acquisition d'image selon la revendication 15, comprenant en outre les étapes consistant à :
effectuer une conversion d'image (SG3) desdites informations de document sur ledit document en un code à barres comme lesdites informations de relation ;
combiner (SG4) ledit code à barres converti avec ladite première image capturée (G1) ; et
mémoriser (SG5) ladite image combinée.

17. Procédé d'acquisition d'image selon la revendication 11, comprenant en outre les étapes consistant à :
acquérir (SI3, SH3, SH6) un instant de début d'affichage et un instant de fin d'affichage, auxquels ladite image de document est projetée, et un instant de capture, auquel la deuxième image capturée (G2) est capturée, comme lesdites informations de relation ; et
mémoriser (SI4, SH7) ledit instant de début d'affichage, ledit instant de fin d'affichage et ledit instant de capture.

18. Procédé d'acquisition d'image selon la revendication 1, comprenant en outre l'étape consistant à mémoriser (SJ3) des informations de gestion pour gérer des emplacements de mémoire dudit document, ladite première image capturée (G1) et ladite deuxième image capturée (G2), et dans lequel lesdites informations de gestion sont utilisées comme lesdites informations de relation.

19. Procédé d'acquisition d'image selon la revendication 11, comprenant en outre l'étape consistant à mémoriser (SM4) lesdites informations de relation ajoutées à une propriété de ladite deuxième image capturée (G2).

20. Procédé d'acquisition d'image selon la revendication 11, comprenant en outre l'étape consistant à projeter ladite première image capturée mémorisée (G1) sur ledit écran (S).
